# EUROPÄISCHE PATENTANMELDUNG

(11) **EP 4 124 632 A1**
(43) Veröffentlichungstag der Anmeldung: **01.02.2023**
(21) Anmeldenummer: 21187927.5
(22) Anmeldetag: 27.07.2021
(51) Int. Cl.: C08G 64/18, C08G 64/20, C08G 77/448, C08G 81/00

(54) **VERFAHREN ZUR HERSTELLUNG EINES POLYSILOXAN-POLYCARBONAT-BLOCKCOPOLYMERS**

(71) Anmelder: Covestro Deutschland AG, 51373 Leverkusen (DE)
(72) Erfinder: Die Erfindernennung liegt noch nicht vor
(74) Vertreter: Levpat

(57) **Zusammenfassung**

Die vorliegende Erfindung betrifft ein kontinuierliches Verfahren zur Herstellung eines Polysiloxan-Polycarbonat-Blockcopolymers durch Polykondensation, wobei dieses Verfahren durch die Verwendung mindestens eines Dünnschichtverdampfers gekennzeichnet ist, wobei dieser mindestens eine Dünnschichtverdampfers mindestens zwei Wischerblattelemente am Umfang aufweist, das in dem jeweiligen mindestens einem Dünnschichtverdampfers rotiert. Bei dem erfindungsgemäßen Verfahren wird ein Oligocarbonat mit einem Hydroxyaryl-terminierten Polysiloxan zu einem Polysiloxan-Polycarbonat-Blockcopolymer - auch als SiCoPC bekannt - umgesetzt. Das Verfahren ist weiterhin dadurch gekennzeichnet, dass bei der Umsetzung des Oligocarbonats mit dem Hydroxyaryl-terminierten Polysiloxan unter Verwendung mindestens eines Dünnschichtverdampfers bestimmte Verfahrensparameter eingehalten werden. Das nach dem erfindungsgemäßen Verfahren hergestellte Polysiloxan-Polycarbonat-Blockcopolymer weist einen kleinen Volumenanteil an großen Polysiloxan-Domänen bei gleichzeitig enger Größenverteilung der Polysiloxan-Domänen auf und zeichnet sich durch gute mechanische Eigenschaften, insbesondere ein zähes Bruchverhalten im Kerbschlagtest nach ISO 7391 / ISO 180A, eine gute Verarbeitbarkeit, beispielsweise im Spritzguss oder in der Extrusion, und eine gute Fließfähigkeit aus.

## Beschreibung

Die vorliegende Erfindung betrifft ein kontinuierliches Verfahren zur Herstellung eines Polysiloxan-Polycarbonat-Blockcopolymers durch Polykondensation, wobei dieses Verfahren durch die Verwendung mindestens eines Dünnschichtverdampfers gekennzeichnet ist, wobei dieser mindestens eine Dünnschichtverdampfer mindestens zwei Wischerblattelemente am Umfang aufweist, die in dem jeweiligen mindestens einen Dünnschichtverdampfer rotieren. Bei dem erfindungsgemäßen Verfahren wird ein Oligocarbonat mit einem Hydroxyaryl-terminierten Polysiloxan zu einem Polysiloxan-Polycarbonat-Blockcopolymer - auch als SiCoPC bekannt - umgesetzt. Das Verfahren ist weiterhin dadurch gekennzeichnet, dass bei der Umsetzung des Oligocarbonats mit dem Hydroxyaryl-terminierten Polysiloxan unter Verwendung mindestens eines Dünnschichtverdampfers bestimmte Verfahrensparameter eingehalten werden. Das nach dem erfindungsgemäßen Verfahren hergestellte Polysiloxan-Polycarbonat-Blockcopolymer weist einen kleinen Volumenanteil an großen Polysiloxan-Domänen bei gleichzeitig enger Größenverteilung der Polysiloxan-Domänen auf und zeichnet sich durch gute mechanische Eigenschaften, insbesondere ein zähes Bruchverhalten im Kerbschlagtest nach ISO 7391 / ISO 180A, eine gute Verarbeitbarkeit, beispielsweise im Spritzguss oder in der Extrusion, und eine gute Fließfähigkeit aus.

Im Sinne der vorliegenden Erfindung ist ein kleiner Volumenanteil an großen Polysiloxan-Domänen bei gleichzeitig enger Größenverteilung der Polysiloxan-Domänen gegeben, wenn im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 70 % ist, wobei gleichzeitig der Volumenanteil an Polysiloxan-Domänen, bei denen der Durchmesser 200 nm überschreitet, geringer als 30 % ist, wobei gleichzeitig der Volumenanteil an Polysiloxan-Domänen, bei denen der Durchmesser 500 nm überschreitet, geringer als 0,1 % ist. Ein solch kleiner Volumenanteil an großen Polysiloxan-Domänen bei gleichzeitig solch enger Größenverteilung der Polysiloxan-Domänen wird nachfolgend auch "feine Polysiloxan-Domänengrößenverteilung" genannt.

Bevorzugt ist im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 60 %, wobei gleichzeitig der Volumenanteil an Polysiloxan-Domänen, bei denen der Durchmesser 200 nm überschreitet, geringer als 20 % ist, wobei gleichzeitig der Volumenanteil an Polysiloxan-Domänen, bei denen der Durchmesser 500 nm überschreitet, geringer als 0,1 % ist.

Besonders bevorzugt ist im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 50 %, wobei gleichzeitig der Volumenanteil an Polysiloxan-Domänen, bei denen der Durchmesser 200 nm überschreitet, geringer als 10 % ist, wobei gleichzeitig der Volumenanteil an Polysiloxan-Domänen, bei denen der Durchmesser 500 nm überschreitet, geringer als 0,1 % ist.

Ganz besonders bevorzugt ist im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 40 %, wobei gleichzeitig der Volumenanteil an Polysiloxan-Domänen, bei denen der Durchmesser 200 nm überschreitet, geringer als 1 % ist, wobei gleichzeitig der Volumenanteil an Polysiloxan-Domänen, bei denen der Durchmesser 500 nm überschreitet, geringer als 0,1 % ist.

Zur Bestimmung der Größe der Polysiloxan-Domänen werden Polymerproben bei tiefer Temperatur angeschnitten und rasterkraftmikroskopisch untersucht wie unten näher beschrieben. Dabei ist im Sinne der vorliegenden Erfindung unter dem Durchmesser einer Polysiloxan-Domäne der Durchmesser des entsprechenden flächengleichen Kreises des im Anschnitt sichtbaren Querschnitts der Polysiloxan-Domäne zu verstehen.

Es ist bekannt, dass Polysiloxan-Polycarbonat-Blockcopolymere gute Eigenschaften bezüglich der Tieftemperaturschlagzähigkeit bzw. Tieftemperaturkerbschlagzähigkeit, der Chemikalienbeständigkeit und Außenbewitterungsbeständigkeit sowie der Alterungseigenschaften und Flammbeständigkeit aufweisen. Sie sind in diesen Eigenschaften den herkömmlichen Polycarbonaten, also Standard-Polycarbonaten überlegen. Im Sinne der vorliegenden Erfindung wird unter einem herkömmlichen Polycarbonat oder Standard-Polycarbonat ein Homopolycarbonat auf Bisphenol-A-Basis verstanden

Im Rahmen der vorliegenden Erfindung wird die relative Lösungsviskosität jeweils in Dichlormethan bei einer Konzentration von 5 g/l bei 25 °C mit einem Ubbelohdeviskosimeter bestimmt.

Gemäß dem Stand der Technik werden Polysiloxan-Polycarbonat-Blockcopolymere ausgehend von Bisphenol-Monomeren und Polydiorganosiloxanen industriell über das sogenannte Phasengrenzflächenverfahren mit Phosgen hergestellt. Ferner ist die Herstellung von Polysiloxan-Polycarbonat-Blockcopolymeren ausgehend von Bisphenol-Monomeren und Polydiorganosiloxanen über das sogenannte Schmelzeumesterungsverfahren unter Einsatz von Diphenylcarbonat aus dem Stand der Technik bekannt.

Die Herstellung von Polysiloxan-Polycarbonat-Blockcopolymeren gemäß dem Stand der Technik hat im Falle des Phasengrenzflächenverfahrens den Nachteil, dass Ausgangsstoffe mit speziellen Anforderungen an ihre Handhabung wie Phosgen benötigt werden. Ferner sind, wenn zur Herstellung von Polysiloxan-Polycarbonat-Blockcopolymeren eine zur Herstellung von Standard-Polycarbonat ausgelegte industrielle Anlage verwendet wird, im Schmelzeumesterungsverfahren die Verweilzeiten der Reaktionsmischungen zur Herstellung der Polysiloxan-Polycarbonat-Blockcopolymere bei hohen Temperaturen in den Reaktoren sehr lang. Dadurch steigt die thermische Belastung auf die Polysiloxan-Polycarbonat-Blockcopolymere stark an, was sich negativ auf die Eigenschaften der Polysiloxan-Polycarbonat-Blockcopolymere auswirkt.

Die Herstellung von Polysiloxan-Polycarbonat-Blockcopolymeren über das Phasengrenzflächenverfahren ist literaturbekannt und beispielsweise in der US 3 189 662 A oder der EP 0 122 535 A2 beschrieben.

In US 5 504 177 A wird die Herstellung eines Polysiloxan-Polycarbonat-Blockcopolymers über die Schmelzeumesterung aus einem carbonatterminierten Polysiloxan mit einem Bisphenol, insbesondere Bisphenol-A, und einem Diarylcarbonat, insbesondere Diphenylcarbonat, beschrieben, wobei die US 5 504 177 A auch auf die Nachteile des Phasengrenzflächenverfahrens eingeht. Aufgrund der großen Unverträglichkeit von Polysiloxanen mit Bisphenolen und Diarylcarbonaten ist der Erhalt einer feinen Polysiloxan-Domänengrößenverteilung beim Einbau der Polysiloxane in die Polycarbonat-Matrix beim Schmelzeumesterungsverfahren nur sehr schwer zu erreichen.

Die Herstellung von Polysiloxan-Polycarbonat-Blockcopolymeren im Schmelzeumesterungsverfahren ist auch in der EP 0 864 599 B1 oder in der EP 0 770 636 A2 beschrieben. Allerdings sind die dort offenbarten Reaktionszeiten für ein großindustrielles Verfahren nicht wirtschaftlich brauchbar. Es wird keine Lehre zum Handeln angegeben, wie die Reaktionszeiten und damit auch die Verweilzeiten verkürzt werden können.

Außerdem offenbart EP 0 770 636 A2 zwar, dass geringe Polysiloxan-Domänengrößen bis hinunter zu 15 nm erreicht werden können, jedoch ist die nur aus den Figuren ersichtliche Polysiloxan-Domänengrößenverteilung für heutige Ansprüche nicht brauchbar. Es werden ferner keine Angaben dazu gemacht, wie eine feine Polysiloxan-Domänengrößenverteilung erhalten werden kann.

Eine weite, also nicht feine, Polysiloxan-Domänengrößenverteilung in einem Polysiloxan-Polycarbonat-Blockcopolymer wirkt sich negativ auf das ästhetische Erscheinungsbild und/oder die mechanischen Eigenschaften von Formteilen aus, die aus einem Polysiloxan-Polycarbonat-Blockcopolymer hergestellt werden. Durch große Polysiloxan-Domänen kann es zur Entmischung der Polysiloxanphase von der Polycarbonatphase im Polysiloxan-Polycarbonat-Blockcopolymer kommen, was sich durch inhomogene Oberflächenstruktur des Polysiloxan-Polycarbonat-Blockcopolymers äußert und zu Fließlinien und Streifenbildung sowie zu unerwünschten optischen Interferenzen in einem durch Spritzguss hergestellten Formkörper aus Polysiloxan-Polycarbonat-Blockcopolymer führen kann. Das ästhetische Erscheinungsbild eines solchen Formkörpers ist ungenügend und ein solcher Formkörper lässt sich nicht mehr gleichmäßig einfärben, und ist daher für viele handelsübliche Verwendungen ungeeignet. Da große Polysiloxan-Domänen scherempfindlich sind und Delamination in einem durch Spritzguss aus einem solchen Polysiloxan-Polycarbonat-Blockcopolymer hergestellten Formkörper verursachen können, lassen sich derartige Polysiloxan-Polycarbonat-Blockcopolymere darüber hinaus schwer im Spritzguss verarbeiten, so dass häufig nur bei sehr niedrigen Einspritzgeschwindigkeiten gearbeitet werden kann, was unerwünscht ist, da es die Zykluszeit verlängert.

Darüber hinaus wird weder in der EP 864 599 B1 noch in der EP 0 770 636 A2 ein Hinweis gegeben, wie die Fließfähigkeit der erhaltenen Polysiloxan-Polycarbonat-Blockcopolymere eingestellt werden kann.

Was unter einer Polysiloxan-Domäne zu verstehen ist, ist dem Fachmann bekannt und kann beispielsweise sowohl der Veröffentlichung "Structure to Property Relationship in Polycarbonate/Polydimethylsiloxane Copolymers" von Matthew R. Pixton, veröffentlicht in "Associacao Brasileira de Polimeros, Sao Paulo, SP (Brazil); [vp.]; 2005; 2 p; 8. Brazilian congress on polymers; 8. congresso brasileiro de polimeros; Aguas de Lindoia, SP (Brazil); 6-10 Nov 2005" als auch der Veröffentlichung "Structure to Property Relationship in Polycarbonate/Polydimethylsiloxane Copolymers" von Matthew R. Pixton, veröffentlicht in "ANTEC 2006, Annual Technical Conference, Charlotte, North Carolina, May 7-11, 2006, Conference Proceedings, Seiten 2655-2659" entnommen werden.

Zwar ist es prinzipiell bekannt, dass durch Zusätze der Volumenanteil an großen Polysiloxan-Domänen im Polysiloxan-Polycarbonat-Blockcopolymer herabgesetzt werden kann. Der Zusatz von Kompatibilisatoren ist beispielsweise in EP 3719077 A1/WO 2020201178 A1 beschrieben. Allerdings sind die dort beschriebenen Kompatibilisatoren sehr teuer, welches die Rohstoffkosten des Polysiloxan-Polycarbonat-Blockcopolymers stark erhöht. Auch andere Kompatibilisatoren sind nachteilig, da sie sehr teuer sind oder sich aufgrund der hohen Temperaturen beim Schmelzeumesterungsverfahren nicht einsetzen lassen, da sie abgebaut werden oder zu einem Produkt mit mangelnder Schmelzestabilität führen.

Ausgehend vom geschilderten Stand der Technik bestand daher die Aufgabe, mindestens einen Nachteil des Stands der Technik zu beheben. Insbesondere lag der vorliegenden Erfindung die Aufgabe zu Grunde, ein Verfahren zur Herstellung eines Polysiloxan-Polycarbonat-Blockcopolymers bereitzustellen, mit dem ein Polysiloxan-Polycarbonat-Blockcopolymer mit feiner Polysiloxan-Domänengrößenverteilung in Kombination mit guter Fließfähigkeit hergestellt werden kann.. Eine gute Fließfähigkeit ist von Vorteil, da es bei der weiteren Verarbeitung eines Polysiloxan-Polycarbonat-Blockcopolymers im Spritzgussprozess die Herstellung von Teilen mit komplexer Geometrie und dünnen Wandstärken erlaubt. Ferner bestand die Aufgabe, das Verfahren derart zu gestalten, dass das Verfahren kurze Verweilzeiten erlaubt und kostengünstig ist und ohne Ausgangsstoffe mit speziellen Anforderungen an ihre Handhabung wie Phosgen auskommt. Verweilzeit meint in diesem Zusammenhang die Zeit, die benötigt wird, um das gewünschte Polysiloxan-Polycarbonat-Blockcopolymer mit der gewünschten relativen Lösungsviskosität unter Einbau der Polysiloxan-Komponente herzustellen; in den nachfolgend beschriebenen erfindungsgemäßen Verfahren stimmt die Verweilzeit mit der Reaktionszeit überein.

Das Verfahren soll kontinuierlich geführt werden können. Zudem bestand eine weitere Aufgabe darin, auf teure Kompatibilisatoren verzichten zu können.

Dabei soll gelten, dass im Polysiloxan-Polycarbonat-Blockcopolymer der Volumenanteil an Polysiloxan-Domänen - gemessen am Gesamtvolumen der Polysiloxan-Domänen -, bei denen der Durchmesser 100 nm überschreitet, geringer als 70 % ist, wobei gleichzeitig der Volumenanteil an Polysiloxan-Domänen, bei denen der Durchmesser 200 nm überschreitet, geringer als 30 % ist, wobei gleichzeitig der Volumenanteil an Polysiloxan-Domänen, bei denen der Durchmesser 500 nm überschreitet, geringer als 0,1 % ist.

Bevorzugt soll gelten, dass im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 60 % ist, wobei gleichzeitig der Volumenanteil an Polysiloxan-Domänen, bei denen der Durchmesser 200 nm überschreitet, geringer als 20 % ist, wobei gleichzeitig der Volumenanteil an Polysiloxan-Domänen, bei denen der Durchmesser 500 nm überschreitet, geringer als 0,1 % ist.

Besonders bevorzugt soll gelten, dass im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 50 % ist, wobei gleichzeitig der Volumenanteil an Polysiloxan-Domänen, bei denen der Durchmesser 200 nm überschreitet, geringer als 10 % ist, wobei gleichzeitig der Volumenanteil an Polysiloxan-Domänen, bei denen der Durchmesser 500 nm überschreitet, geringer als 0,1 % ist.

Ganz besonders bevorzugt soll gelten, dass im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 40 % ist, wobei gleichzeitig der Volumenanteil an Polysiloxan-Domänen, bei denen der Durchmesser 200 nm überschreitet, geringer als 1 % ist, wobei gleichzeitig der Volumenanteil an Polysiloxan-Domänen, bei denen der Durchmesser 500 nm überschreitet, geringer als 0,1 % ist.

Dabei soll die Fließfähigkeit weiterhin hoch sein. Die Fließfähigkeit soll jedoch nicht einen Wert überschreiten, bei der sie zu schlechteren mechanischen Eigenschaften eines Formteils führt, das aus dem nach dem erfindungsgemäßen Verfahren hergestellten Polysiloxan-Polycarbonat-Blockcopolymer - insbesondere durch Spritzguss - hergestellt wurde. Als Maß für die Fließfähigkeit kann die relative Lösungsviskosität angesehen werden. So soll vorzugsweise die relative Lösungsviskosität eines nach dem erfindungsgemäßen Verfahren hergestellten Polysiloxan-Polycarbonat-Blockcopolymers mit einem Polysiloxangehalt von 2 bis 15 Gew.-%, bevorzugt von 3 bis 10 Gew.-%, besonders bevorzugt mit einem Polysiloxangehalt von 4 bis 8 Gew.-%, von 1,24 bis 1,38, bevorzugt von 1,26 bis 1,36, besonders bevorzugt von 1,27 bis 1,35 sein. In diesem Bereich der relativen Lösungsviskosität lässt sich ein erfindungsgemäß hergestelltes Polysiloxan-Polycarbonat-Blockcopolymer gut verarbeiten, beispielsweise durch Spritzguss oder Extrusion.

Ganz besonders bevorzugt soll die relative Lösungsviskosität eines nach dem erfindungsgemäßen Verfahren hergestellten Polysiloxan-Polycarbonat-Blockcopolymers mit einem Polysiloxangehalt von 4,5 bis 5,5 Gew.-%, von 1,24 bis 1,34, bevorzugt von 1,26 bis 1,33, besonders bevorzugt von 1,27 bis 1,32 sein.

Auch dabei soll gelten, dass im Polysiloxan-Polycarbonat-Blockcopolymer der Volumenanteil an Polysiloxan-Domänen - gemessen am Gesamtvolumen der Polysiloxan-Domänen -, bei denen der Durchmesser 100 nm überschreitet, geringer als 70 % ist, wobei gleichzeitig der Volumenanteil an Polysiloxan-Domänen, bei denen der Durchmesser 200 nm überschreitet, geringer als 30 % ist, wobei gleichzeitig der Volumenanteil an Polysiloxan-Domänen, bei denen der Durchmesser 500 nm überschreitet, geringer als 0,1 % ist.

Auch dabei soll bevorzugt gelten, dass im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 60 % ist, wobei gleichzeitig der Volumenanteil an Polysiloxan-Domänen, bei denen der Durchmesser 200 nm überschreitet, geringer als 20 % ist, wobei gleichzeitig der Volumenanteil an Polysiloxan-Domänen, bei denen der Durchmesser 500 nm überschreitet, geringer als 0,1 % ist.

Auch dabei soll besonders bevorzugt gelten, dass im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 50 % ist, wobei gleichzeitig der Volumenanteil an Polysiloxan-Domänen, bei denen der Durchmesser 200 nm überschreitet, geringer als 10 % ist, wobei gleichzeitig der Volumenanteil an Polysiloxan-Domänen, bei denen der Durchmesser 500 nm überschreitet, geringer als 0,1 % ist.

Auch dabei soll ganz besonders bevorzugt gelten, dass im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 40 % ist, wobei gleichzeitig der Volumenanteil an Polysiloxan-Domänen, bei denen der Durchmesser 200 nm überschreitet, geringer als 1 % ist, wobei gleichzeitig der Volumenanteil an Polysiloxan-Domänen, bei denen der Durchmesser 500 nm überschreitet, geringer als 0,1 % ist.

In diesem ganz besonders bevorzugten Bereich der relativen Lösungsviskosität lässt sich ein erfindungsgemäß hergestelltes Polysiloxan-Polycarbonat-Blockcopolymer ganz besonders gut verarbeiten, beispielsweise durch Spritzguss oder Extrusion.

Dies gilt insbesondere, wenn das nach dem erfindungsgemäßen Verfahren hergestellte Polysiloxan-Polycarbonat-Blockcopolymer einen Polysiloxangehalt von 4,5 bis 5,5 Gew.-% aufweist.

Weiterhin besonders bevorzugt weist ein nach dem erfindungsgemäßen Verfahren hergestelltes Polysiloxan-Polycarbonat-Blockcopolymer bis -60°C ein zähes Bruchverhalten im Kerbschlagtest nach ISO 7391 / ISO 180A auf, sogar bei niedrigen Polysiloxangehalten.

Gelöst werden diese Aufgaben durch ein Verfahren zur Herstellung eines Polysiloxan-Polycarbonat-Blockcopolymers, wobei dieses Verfahren durch die Verwendung genau eines Dünnschichtverdampfers oder alternativ durch die Verwendung von zwei oder mehr in Reihe geschalteter Dünnschichtverdampfer gekennzeichnet ist, wobei jeweils besondere Verfahrensbedingungen eingehalten werden.

Im Sinne der vorliegenden Erfindung ist ein Dünnschichtverdampfer ein vertikal angeordneter Apparat, der eine sich in axialer Richtung erstreckende rotationssymmetrische - vorzugsweise zylindrische - Reaktionskammer aufweist und der an seinem oberen Ende mit einem Reaktionsgemisch aus einer Polymerschmelze und einem flüssigen Polysiloxan in Form einer Schmelzedispersion beaufschlagt wird, die an seinem unteren Ende in Form eines weiter reagierten Reaktionsgemischs aus dem Apparat ausgetragen wird, und der mit einem Rotor ausgestattet ist, der mindestens zwei Wischerblattelemente, in der Regel drei, vier oder mehr Wischerblattelemente, am Umfang aufweist. Dabei weist jedes Wischerblattelement eine Außenkante auf, wobei die Außenkante eines Wischerblattelements sich in axialer Richtung erstreckt und auf die Innenfläche der sich in axialer Richtung erstreckenden rotationssymmetrischen Reaktionskammer gerichtet ist und das Reaktionsgemisch auf dem inneren Umfang der sich in axialer Richtung erstreckenden rotationssymmetrischen Reaktionskammer ausstreicht und somit immer wieder für eine Oberflächenerneuerung des Reaktionsgemischs sorgt. Die Innenfläche der Reaktionskammer weist dabei die gleiche geometrische Form auf wie die Reaktionskammer, d.h. eine zylindrische Reaktionskammer weist auch eine zylindrische Innenfläche auf. Ein Wischerblattelement kann dabei achsparallel oder mit einem Anstellwinkel zur Längsachse angeordnet sein. Dünnschichtverdampfer, die zur Durchführung des erfindungsgemäßen Verfahrens grundsätzlich geeignet sind, sind beispielsweise in der EP3318311A1, der EP1792643A1, der DE19535817A1, der DE102012103749A1, der DE2011493A1 oder der DD-226778B1 oder in der Veröffentlichung [1] "Platzer (Hrsg.): Polymerization Kinetics and Technology, Advances in Chemistry; American Chemical Society: Washington, DC, 1973, Seiten 51 bis 67: Fritz Widmer: Behaviour of Viscous Polymers during Solvent Stripping or Reaction in an Agitated Thin Film; Swiss Federal Institute of Technology, Zürich, Switzerland" offenbart, wobei der in DE19535817A1, der DD-226778B1 oder der in der EP3318311A1 oder der in [1], Fig. 7, Seite 58, und Fig. 9, Seite 60, offenbarte Dünnschichtverdampfer insbesondere zur Durchführung des erfindungsgemäßen Verfahrens geeignet ist. Außerdem werden in dem Aufsatz "Scaleup of Agitated Thin-film Evaporaters", William B. Glover, reprinted from Chemical Engineering, April 2004, Möglichkeiten zur Auslegung von Dünnschichtverdampfern offenbart.

Das Ausstreichen der Schmelze des Reaktionsgemischs an der Innenfläche der Reaktionskammer des Dünnschichtverdampfers ist wichtig, da die für die Polykondensation des Oligocarbonats und des Polysiloxans zum Polysiloxan-Polycarbonat-Blockcopolymer die effektive Entfernung einer bei der Polykondensation entstehenden Hydroxylverbindung - in aller Regel Phenol - durch Verdampfung stattfinden muss, wofür eine ständige Oberflächenerneuerung erforderlich ist. Normalerweise werden für derartige Aufgaben, bei denen eine große Oberfläche bei gleichzeitig guter Oberflächenerneuerung erzeugt werden soll, Reaktoren wie Scheibenreaktoren oder andere Hochviskosreaktoren eingesetzt, bei denen die Verweilzeit des Reaktionsgemischs im Reaktor jedoch von 60 bis 180 Minuten beträgt. Bei der Polykondensation zur Herstellung von Standard-Polycarbonaten ist insbesondere der Einsatz von Scheibenreaktoren im Stand der Technik beschrieben, beispielsweise in der US 2002 188 091 A1 oder DE 101 42 735 A1.

Daher war es völlig überraschend, dass Scheibenreaktoren oder andere Hochviskosreaktoren für die Herstellung eines Polysiloxan-Polycarbonat-Blockcopolymers mit einer guten Kombination von enger Polysiloxan-Domänengrößenverteilung und guter Fließfähigkeit nicht geeignet sind, da sie noch nicht einmal unter Verwendung eines kostspieligen Kompatibilisators eine ausreichend feine Größenverteilung der Polysiloxan-Domänen gewährleisten.
(1) Insbesondere werden die Aufgaben nach einer ersten Ausführungsform der Erfindung gelöst durch ein:
   Verfahren zur kontinuierlichen Herstellung eines Polysiloxan-Polycarbonat-Blockcopolymers unter Verwendung genau eines Dünnschichtverdampfers,
   wobei das Verfahren durch folgende Verfahrensschritte gekennzeichnet ist:
      (1) Bereitstellen eines Reaktionsgemischs enthaltend ein Oligocarbonat mit einer relativen Lösungsviskosität von 1,08 bis 1,22 und mit einem OH-Gruppengehalt von 1000 bis 2500 ppm und enthaltend ein Hydroxyaryl-terminertes Polysiloxan,
      (2) Eintragen des in Schritt (1) bereitgestellten Reaktionsgemischs enthaltend ein Oligocarbonat und ein Hydroxyaryl-terminiertes Polysiloxan in den genau einen Dünnschichtverdampfer, wobei der Dünnschichtverdampfer genau eine Reaktionskammer mit genau einem Rotor mit mindestens zwei Wischerblattelementen am Umfang aufweist, wobei der genau eine Rotor in dem Dünnschichtverdampfer rotiert, und wobei ein Wischerblattelement je eine Außenkante aufweist,
      (3) Umsetzung des Reaktionsgemischs aus Schritt (2) zu einem Polysiloxan-Polycarbonat-Blockcopolymer, wobei das Reaktionsgemisch vom Eintrag des Dünnschichtverdampfers bis zum Austrag des Dünnschichtverdampfers gefördert wird,
      (4) Austrag des in Schritt (3) erhaltenen Polysiloxan-Polycarbonat-Blockcopolymers aus dem Dünnschichtverdampfer,
   wobei in Schritt (3) in dem genau einem Dünnschichtverdampfer folgende Verfahrensbedingungen eingehalten werden:
      (3.a) Scherrate zwischen der Außenkante der mindestens zwei rotierenden Wischerblattelemente am Umfang und der sich in axialer Richtung erstreckenden rotationssymmetrischen Innenfläche der Reaktionskammer des Dünnschichtverdampfers von 500 1/s bis 5000 1/s,
      (3.b) Druck in der Reaktionskammer des Dünnschichtverdampfers von 0,01 mbara bis 10 mbara,
      (3.c) Temperatur des Reaktionsgemischs in der Reaktionskammer von 280°C bis 370°C,
      (3.d) Frequenz der Oberflächenerneuerung des Reaktionsgemischs von 10 bis 50 Hz.
(2) Alternativ werden die Aufgaben nach einer zweiten Ausführungsform der Erfindung gelöst durch ein:
   Verfahren zur kontinuierlichen Herstellung eines Polysiloxan-Polycarbonat-Blockcopolymers unter Verwendung einer Anzahl von in Reihe geschalteter Dünnschichtverdampfer, wobei diese Anzahl mindestens zwei beträgt,
   wobei das Verfahren durch folgende Verfahrensschritte gekennzeichnet ist:
      (1) Bereitstellen eines Reaktionsgemischs enthaltend ein Oligocarbonat mit einer relativen Lösungsviskosität von 1,08 bis 1,22 und mit einem OH-Gruppengehalt von 1000 bis 2500 ppm und enthaltend ein Hydroxyaryl-terminiertes Polysiloxan,
      (2) Eintragen des in Schritt (1) bereitgestellten Reaktionsgemischs enthaltend ein Oligocarbonat und ein Hydroxyaryl-terminiertes Polysiloxan in den ersten der mindesten zwei in Reihe geschalteter Dünnschichtverdampfer,
         wobei jeder der mindestens zwei Dünnschichtverdampfer genau je eine Reaktionskammer mit genau je einem Rotor mit jeweils mindestens zwei Wischerblattelementen am Umfang aufweist, wobei der genau je eine Rotor in dem jeweiligen Dünnschichtverdampfer rotiert, und wobei ein Wischerblattelement je eine Außenkante aufweist,
      (3) Umsetzung des Reaktionsgemischs aus Schritt (2) zu einem Polysiloxan-Polycarbonat-Blockcopolymer,
         wobei das Reaktionsgemisch vom Eintrag des ersten Dünnschichtverdampfer der mindestens zwei in Reihe geschalteten Dünnschichtverdampfer bis zum Austrag des letzten Dünnschichtverdampfers der mindestens zwei in Reihe geschalteten Dünnschichtverdampfer gefördert wird,
      (4) Austrag des in Schritt (3) erhaltenen Polysiloxan-Polycarbonat-Blockcopolymers aus
         dem letzten Dünnschichtverdampfer,
   wobei in Schritt (3) in dem letzten der mindestens zwei in Reihe geschalteten Dünnschichtverdampfer folgende Verfahrensbedingungen eingehalten werden:
      (3.a) Scherrate zwischen der Außenkante der mindestens zwei rotierenden Wischerblattelemente am Umfang und der sich in axialer Richtung erstreckenden rotationssymmetrischen Innenfläche der Reaktionskammer des Dünnschichtverdampfers von 500 1/s bis 5000 1/s,
      (3.b) Druck in der Reaktionskammer des Dünnschichtverdampfers von 0,01 mbara bis 10 mbara,
      (3.c) Temperatur des Reaktionsgemischs in der Reaktionskammer von 280 °C bis 370 °C,
      (3.d) Frequenz der Oberflächenerneuerung des Reaktionsgemischs von 10 bis 50 Hz.

Sowohl bei der ersten Ausführungsform des erfindungsgemäßen Verfahrens als auch bei der zweiten Ausführungsform des erfindungsgemäßen Verfahrens gilt, dass:
Zur Druckmessung können beispielsweise Drucksensoren vom Typ WIKA IS-3 oder Endress+Hauser Cerabar eingesetzt werden. Es können jedoch auch andere geeignete, dem Fachmann bekannte Drucksensoren aus dem Stand der Technik verwendet werden.
Zur Messung der Temperatur des Reaktionsgemischs können beispielsweise Thermoelemente vom Typ L oder Widerstandsthermometer vom Typ Pt100 eingesetzt werden, deren Messspitze ausreichend tief in das Reaktionsgemisch eintaucht. Es können jedoch auch andere geeignete, dem Fachmann bekannte Temperaturmessgeräte aus dem Stand der Technik verwendet werden. Eine Temperaturmessung im Inneren des Dünnschichtverdampfers kann dabei nach der aus EP3318311A1 bekannten Weise erfolgen.

Die Drehzahl kann vorzugsweise nach einer einem Fachmann bekannten Weise durch einen Initiator bzw. Pulsgeber aus dem Stand der Technik am Rotor gemessen werden. Es können jedoch auch andere geeignete, dem Fachmann bekannte Drehzahlmesser aus dem Stand der Technik verwendet werden. Die Frequenz der Oberflächenerneuerung ergibt sich durch die Multiplikation der Drehzahl mit der Anzahl der Wischerblattelemente am Umfang.
Die Scherrate ergibt sich rechnerisch durch Division der Umfangsgeschwindigkeit des Rotors - bestimmt aus dem inneren Umfang der Behandlungskammer und der Drehzahl des Rotors - durch die Weite des Spaltes zwischen der Rotorspitze und der Gehäusewand.

Sowohl bei der ersten Ausführungsform des erfindungsgemäßen Verfahrens als auch bei der zweiten Ausführungsform des erfindungsgemäßen Verfahrens beträgt die Verweilzeit des Reaktionsgemischs in Schritt (3) bevorzugt 2 bis 12 Minuten, besonders bevorzugt 3 bis 10 Minuten.

Sowohl bei der ersten Ausführungsform des erfindungsgemäßen Verfahrens als auch bei der zweiten Ausführungsform des erfindungsgemäßen Verfahrens sind also die damit hergestellten Polysiloxan-Polycarbonat-Blockcopolymere in kurzen Verweilzeiten erhältlich.

Bei der zweiten Ausführungsform der vorliegenden Erfindung kann die Anzahl der in Reihe geschalteten Dünnschichtverdampfer zwei oder drei oder vier oder mehr in Reihe geschalteter Dünnschichtverdampfer sein.

Erfindungsgemäß bevorzugt beträgt bei der zweiten Ausführungsform der vorliegenden Erfindung die Anzahl der in Reihe geschalteten Dünnschichtverdampfer genau zwei.

Ein erfindungsgemäß verwendbarer Dünnschichtverdampfer ist dadurch gekennzeichnet, dass der Dünnschichtverdampfer mindestens zwei Wischerblattelemente am Umfang aufweist, die in dem Dünnschichtverdampfer rotierbar sind. Bevorzugt weist der Dünnschichtverdampfer mehr als zwei Wischerblattelemente, insbesondere drei, vier oder mehr Wischerblattelemente am Umfang auf, die in dem Dünnschichtverdampfer rotierbar sind.

Mindestens ein Teil der sich in axialer Richtung erstreckenden rotationssymmetrischen Innenfläche der sich in axialer Richtung erstreckenden rotationssymmetrischen Reaktionskammer eines Dünnschichtverdampfers dient auch als Wärmeübertragungsfläche. Über die Wärmeübertragungsfläche kann Wärme in die Reaktionskammer zugeführt werden oder über die Wärmeübertragungsfläche kann Wärme aus der Reaktionskammer abgeführt werden. Bei einem Dünnschichtverdampfer beträgt der Anteil der mit Reaktionsmischung beaufschlagten, sich in axialer Richtung erstreckenden rotationssymmetrischen Innenfläche der sich in axialer Richtung erstreckenden rotationssymmetrischen Reaktionskammer, der als Wärmeübertragungsfläche dient, von 90 bis 100 %, bevorzugt 100 %.

Dabei beträgt sowohl nach der ersten Ausführungsform des erfindungsgemäßen Verfahrens als auch nach der zweiten Ausführungsform des erfindungsgemäßen Verfahrens die Temperatur der Wärmeübertragungsfläche von 280 °C bis 340 °C, so dass in Verfahrensschritt (3) während der Umsetzung des Reaktionsgemischs möglicherweise entstehende Wärme, beispielsweise durch die Scherung des Reaktionsgemischs, über die Wärmeübertragungsfläche abgeführt werden kann. Die Wärmeübertragungsfläche kann dabei ein Temperaturprofil aufweisen oder zwei oder mehr Temperaturzonen aufweisen oder beides.

Im Sinne der vorliegenden Erfindung steht der Begriff "mbara" für die Einheit "mbar absolut" zur Angabe des Absolutdrucks in mbar.

In Schritt (1) wird das Reaktionsgemisch vorzugsweise dadurch bereitgestellt, dass das Oligocarbonat durch Polykondensation hergestellt und mit einem bereits andernorts hergestellten Hydroxyaryl-terminierten Polysiloxan vermischt wird. Es ist aber auch möglich, dass ein bereits andernorts hergestelltes Reaktionsgemisch plastifiziert und als Schmelze bereitgestellt wird.

Sowohl bei der ersten Ausführungsform des erfindungsgemäßen Verfahrens als auch bei der zweiten Ausführungsform des erfindungsgemäßen Verfahrens gilt, dass sowohl das Reaktionsgemisch im Verfahrensschritt (1) als auch das beim Austrag aus dem letzten Dünnschichtverdampfer einer Anzahl von in Reihe geschalteter Dünnschichtverdampfer erhaltene Polysiloxan-Polycarbonat-Blockcopolymer als auch die zwischenzeitlich aus dem Reaktionsgemisch im Verfahrensschritt (1) bei der Umsetzung zum Polysiloxan-Polycarbonat-Blockcopolymers entstehenden Reaktionsgemische in schmelzflüssiger Form vorliegen. Dabei kann bei der ersten Ausführungsform des erfindungsgemäßen Verfahrens der einzige Dünnschichtverdampfer als letzter Dünnschichtverdampfer angesehen werden.

Sowohl das nach der ersten Ausführungsform des erfindungsgemäßen Verfahrens erhaltene Polysiloxan-Polycarbonat-Blockcopolymer als auch das nach der zweiten Ausführungsform des erfindungsgemäßen Verfahrens erhaltene Polysiloxan-Polycarbonat-Blockcopolymer weist bevorzugt folgende Merkmale auf:
- Die Polysiloxan-Domänen weisen eine feine Größenverteilung auf, d.h.:
   im Polysiloxan-Polycarbonat-Blockcopolymer der ist Volumenanteil an Polysiloxan-Domänen - gemessen am Gesamtvolumen der Polysiloxan-Domänen - , bei denen der Durchmesser 100 nm überschreitet, geringer als 70 %, wobei gleichzeitig der Volumenanteil an Polysiloxan-Domänen, bei denen der Durchmesser 200 nm überschreitet, geringer als 30 % ist, wobei gleichzeitig der Volumenanteil an Polysiloxan-Domänen, bei denen der Durchmesser 500 nm überschreitet, geringer als 0,1 % ist; dabei beträgt die relative Lösungsviskosität von 1,38 bis 1,24, bevorzugt von 1,36 bis 1,26, besonders bevorzugt von 1,35 bis 1,27; diese relative Lösungsviskosität wird auch als gewünschte relative Lösungsviskosität bezeichnet.
- Bevorzugt ist im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 60 %, wobei gleichzeitig der Volumenanteil an Polysiloxan-Domänen, bei denen der Durchmesser 200 nm überschreitet, geringer als 20 % ist, wobei gleichzeitig der Volumenanteil an Polysiloxan-Domänen, bei denen der Durchmesser 500 nm überschreitet, geringer als 0,1 % ist; auch dabei beträgt die relative Lösungsviskosität von 1,36 bis 1,24, bevorzugt von 1,36 bis 1,26, besonders bevorzugt von 1,35 bis 1,27; auch hier wird diese relative Lösungsviskosität auch als gewünschte relative Lösungsviskosität bezeichnet.
- Besonders bevorzugt ist im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 50 % ist, wobei gleichzeitig der Volumenanteil an Polysiloxan-Domänen, bei denen der Durchmesser 200 nm überschreitet, geringer als 10 % ist, wobei gleichzeitig der Volumenanteil an Polysiloxan-Domänen, bei denen der Durchmesser 500 nm überschreitet, geringer als 0,1 % ist; auch dabei beträgt die relative Lösungsviskosität von 1,38 bis 1,24, bevorzugt von 1,36 bis 1,26, besonders bevorzugt von 1,35 bis 1,27; auch hier wird diese relative Lösungsviskosität auch als gewünschte relative Lösungsviskosität bezeichnet.
- Ganz besonders bevorzugt ist im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 40 %, wobei gleichzeitig der Volumenanteil an Polysiloxan-Domänen, bei denen der Durchmesser 200 nm überschreitet, geringer als 1 % ist, wobei gleichzeitig der Volumenanteil an Polysiloxan-Domänen, bei denen der Durchmesser 500 nm überschreitet, geringer als 0,1 % ist; auch dabei beträgt die relative Lösungsviskosität von 1,38 bis 1,24, bevorzugt von 1,36 bis 1,26, besonders bevorzugt von 1,352 bis 1,27; auch hier wird diese relative Lösungsviskosität auch als gewünschte relative Lösungsviskosität bezeichnet.

Sowohl das nach der ersten Ausführungsform des erfindungsgemäßen Verfahrens erhaltene Polysiloxan-Polycarbonat-Blockcopolymer als auch das nach der zweiten Ausführungsform des erfindungsgemäßen Verfahrens erhaltene Polysiloxan-Polycarbonat-Blockcopolymer ist damit Polysiloxan-Polycarbonat-Blockcopolymeren aus dem Stand der Technik mit einem Polysiloxangehalt von 2 bis 15 Gew.-%, sogar Polysiloxan-Polycarbonat-Blockcopolymeren aus dem Stand der Technik mit einem Polysiloxangehalt von 3 bis 10 Gew.-%, und sogar Polysiloxan-Polycarbonat-Blockcopolymeren aus dem Stand der Technik mit einem Polysiloxangehalt von 4 bis 8 Gew.-%, überlegen, wobei der Polysiloxangehalt sich auf das Gesamtgewicht des Polysiloxan-Polycarbonat-Blockcopolymers bezieht. Dies gilt insbesondere im Vergleich eines erfindungsgemäß hergestellten Polysiloxan-Polycarbonat-Blockcopolymers mit einem Polysiloxan-Polycarbonat-Blockcopolymer, das nach dem Schmelzeumesterungsverfahren hergestellt wurde.

Sofern das nach dem erfindungsgemäßen Verfahren hergestellte Polysiloxan-Polycarbonat-Blockcopolymer einen Polysiloxangehalt von 4,5 bis 5,5 Gew.-% aufweist, weist dieses Polysiloxan-Polycarbonat-Blockcopolymers eine relative Lösungsviskosität von 1,24 bis 1,34, bevorzugt von 1,26 bis 1,33, besonders bevorzugt von 1,27 bis 1,32 auf, wobei auch hier gilt:
Die Polysiloxan-Domänen weisen eine feine Größenverteilung auf, d.h.:
im Polysiloxan-Polycarbonat-Blockcopolymer ist der Volumenanteil an Polysiloxan-Domänen - gemessen am Gesamtvolumen der Polysiloxan-Domänen - , bei denen der Durchmesser 100 nm überschreitet, geringer als 70 %, wobei gleichzeitig der Volumenanteil an Polysiloxan-Domänen, bei denen der Durchmesser 200 nm überschreitet, geringer als 30 % ist, wobei gleichzeitig der Volumenanteil an Polysiloxan-Domänen, bei denen der Durchmesser 500 nm überschreitet, geringer als 0,1 % ist.

Bevorzugt ist im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 60 %, wobei gleichzeitig der Volumenanteil an Polysiloxan-Domänen, bei denen der Durchmesser 200 nm überschreitet, geringer als 20 % ist, wobei gleichzeitig der Volumenanteil an Polysiloxan-Domänen, bei denen der Durchmesser 500 nm überschreitet, geringer als 0,1 % ist.

Besonders bevorzugt ist im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 50 %, wobei gleichzeitig der Volumenanteil an Polysiloxan-Domänen, bei denen der Durchmesser 200 nm überschreitet, geringer als 10 % ist, wobei gleichzeitig der Volumenanteil an Polysiloxan-Domänen, bei denen der Durchmesser 500 nm überschreitet, geringer als 0,1 % ist.

Ganz besonders bevorzugt ist im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 40 %, wobei gleichzeitig der Volumenanteil an Polysiloxan-Domänen, bei denen der Durchmesser 200 nm überschreitet, geringer als 1 % ist, wobei gleichzeitig der Volumenanteil an Polysiloxan-Domänen, bei denen der Durchmesser 500 nm überschreitet, geringer als 0,1 % ist.

Durch die günstige relative Lösungsviskosität eines nach dem erfindungsgemäßen Verfahren hergestellten Polysiloxan-Polycarbonat-Blockcopolymers mit einem Polysiloxangehalt von 4,5 bis 5,5 Gew.-% treten die oben genannten Vorteile bei einem solchen Polysiloxan-Polycarbonat-Blockcopolymers in besonderem Maße auf. Insbesondere lässt sich ein solches Polysiloxan-Polycarbonat-Blockcopolymer besonders gut verarbeiten, beispielsweise durch Spritzguss oder Extrusion.

Dabei ist der ganz besonders bevorzugte Bereich so gewählt, dass ein Polysiloxan-Polycarbonat-Blockcopolymer mit diesem Polysiloxangehalt in Kombination mit der angegebenen relativen Lösungsviskosität sowohl gute mechanische Eigenschaften als auch eine gute Verarbeitbarkeit erreichen kann. Die insbesondere bei höheren Polysiloxangehalten erhöhte relative Lösungsviskosität kann dazu führen, dass die Verarbeitbarkeit nicht mehr optimal ist. Jedoch ist es möglich, durch Zumischung von herkömmlichen Polycarbonat mit einer niedrigeren relativen Lösungsviskosität einen Polysiloxangehalt einzustellen, die dem ganz besonders bevorzugten Bereich entspricht. Eine solche Mischung zeichnet sich dann wieder durch die guten mechanischen Eigenschaften in Kombination mit guter Fließfähigkeit aus. Dem Fachmann ist das Mischen bzw. Compoundieren von herkömmlichen Polycarbonat mit einem Polysiloxan-Polycarbonat-Blockcopolymer bekannt, insbesondere auch welche relative Lösungsviskosität das herkömmliche Polycarbonat aufweisen muss, um die gewünschte relative Lösungsviskositäten einer Mischung von herkömmlichen Polycarbonat mit einem Polysiloxan-Polycarbonat-Blockcopolymer zu erreichen. Insofern ist der besonders bevorzugte Bereich nicht limitierend, da sich insbesondere bei hohen Polysiloxangehalten im Polysiloxan-Polycarbonat-Blockcopolymer durch aus dem Stand der Technik bekanntem Compoundieren eines Polysiloxan-Polycarbonat-Blockcopolymer mit herkömmlichen Polycarbonat sich die Kombination von Polysiloxangehalt und relativer Lösungsviskosität erreichen lässt. Allerdings ist es auch so, dass bei zu hohen Werten der relativen Lösungsviskosität eines Polysiloxan-Polycarbonat-Blockcopolymers mit einem hohen Polysiloxangehalt dieser hohe Wert der relativen Lösungviskosität durch Zumischung von herkömmlichen Polycarbonat mit einer niedrigeren relativen Lösungsviskosität nicht auf Werte für die relative Lösungsviskosität verringert werden kann, bei denen eine gute Verarbeitbarkeit des Polysiloxan-Polycarbonat-Blockcopolymers noch gewährleistet ist.

Auch weist ein nach dem erfindungsgemäßen Verfahren hergestelltes Polysiloxan-Polycarbonat-Blockcopolymer bis -60°C ein zähes Bruchverhalten im Kerbschlagtest nach ISO 7391 / ISO 180A auf, sogar noch bei niedrigen Polysiloxangehalten.

Dies ist überraschend, denn durch die in Schritt (3.a) angewandten hohen Scherraten wird das Reaktionsgemisch enthaltend Oligocarbonat und Hydroxyaryl-terminiertes Polysiloxan und insbesondere das daraus entstehende Polysiloxan-Polycarbonat-Blockcopolymer einer hohen mechanischen und insbesondere thermischen Belastung ausgesetzt. Thermische Belastung führt zu unerwünschten Nebenreaktionen, die zu einer unerwünschten Verfärbung, insbesondere Vergilbung, des Polysiloxan-Polycarbonat-Blockcopolymers und zu schlechteren mechanischen Eigenschaften, insbesondere schlechterer Tieftemperaturschlagzähigkeit, eines Formteils führen können, das aus dem nach dem erfindungsgemäßen Verfahren hergestellten Polysiloxan-Polycarbonat-Blockcopolymer hergestellt wurde.

Ein Fachmann hätte also zu vermeiden versucht, ein Polysiloxan-Polycarbonat-Blockcopolymers unter Einsatz einer solch hohen Scherrate herzustellen.

Es wurde jedoch gefunden, dass bei einem Verfahren zur Herstellung eines Polysiloxan-Polycarbonat-Blockcopolymers unter Anwendung von ausgewählten hohen Scherraten bei gleichzeitiger Anwendung eines ausgewählten niedrigen Drucks, ausgewählter Temperaturen und ausgewählter Frequenz der Oberflächenerneuerung, thermisch geringer belastende Verfahrensbedingungen erreicht werden können.

Dies war überraschend für einen Fachmann. Insbesondere für den Fachmann überraschend war auch, dass dies bei der zweiten Ausführungsform - also unter Verwendung mindestens zweier in Reihe geschalteter Dünnschichtverdampfer - erreicht wurde, obwohl kein Kompatibilisator eingesetzt wurde.

Erfindungsgemäß bevorzugt ist dabei, dass in Verfahrensschritt (3) in dem einzigen Dünnschichtverdampfer oder in dem letzten Dünnschichtverdampfer einer Anzahl in Reihe geschalteter Dünnschichtverdampfers folgende Verfahrensbedingung eingehalten wird:
(3.a.a) dass die Scherrate zwischen der rotierenden Außenkante eines Wischerblattelements und der sich axial erstreckenden rotationssymmetrischen Innenfläche der Reaktionskammer des Dünnschichtverdampfer von 500 1/s bis 4000 1/s beträgt.
Diese bevorzugte Ausführungsform des erfindungsgemäßen Verfahrens stellt eine dritte Ausführungsform nach der oben dargestellten ersten Ausführungsform oder der oben dargestellten zweiten Ausführungsform dar.

Weiter erfindungsgemäß bevorzugt ist dabei, dass in Verfahrensschritt (3) in dem einzigen Dünnschichtverdampfer oder in dem letzten Dünnschichtverdampfer einer Anzahl von in Reihe geschalteter Dünnschichtverdampfer folgende Verfahrensbedingung eingehalten wird:
(3.b.a) dass der Druck in der Reaktionskammer des Dünnschichtverdampfers von 0,1 mbara bis 6 mbara, bevorzugt von 0,2 mbara bis 2 mbara beträgt.
Diese weiter bevorzugte Ausführungsform des erfindungsgemäßen Verfahrens stellt eine vierte Ausführungsform nach der oben dargestellten ersten Ausführungsform oder der oben dargestellten zweiten Ausführungsform dar.

Außerdem erfindungsgemäß bevorzugt ist dabei, dass die relative Lösungsviskosität des Oligocarbonats, das in Schritt (1) bereitgestellt wird, von 1,11 bis 1,22, besonders bevorzugt 1,13 bis 1,20, beträgt.

Diese ganz besonders bevorzugte Ausführungsform des erfindungsgemäßen Verfahrens stellt eine fünfte Ausführungsform nach der oben dargestellten ersten Ausführungsform oder der oben dargestellten zweiten Ausführungsform dar.

Weiter erfindungsgemäß bevorzugt ist dabei, dass der Polysiloxangehalt sowohl des nach der ersten Ausführungsform des erfindungsgemäßen Verfahrens hergestellen Polysiloxan-Polycarbonat-Blockcopolymers als auch des nach der zweiten Ausführungsform des erfindungsgemäßen Verfahrens hergestellen Polysiloxan-Polycarbonat-Blockcopolymers von 2 bis 15 Gew.-% beträgt, wobei der Polysiloxangehalt bezogen ist auf das Gesamtgewicht des Polysiloxan-Polycarbonat-Blockcopolymers. Diese weiter bevorzugte Ausführungsform des erfindungsgemäßen Verfahrens stellt eine sechste Ausführungsform nach der oben dargestellten ersten Ausführungsform oder der oben dargestellten zweiten Ausführungsform dar.

Erfindungsgemäß besonders bevorzugt ist dabei, dass der Polysiloxangehalt des Polysiloxan-Polycarbonat-Blockcopolymers von 3 bis 10 Gew.-% beträgt, wobei der Polysiloxangehalt bezogen ist auf das Gesamtgewicht des Polysiloxan-Polycarbonat-Blockcopolymers.
Diese besonders bevorzugte Ausführungsform des erfindungsgemäßen Verfahrens stellt eine siebte Ausführungsform nach der oben dargestellten sechsten Ausführungsform dar.

Erfindungsgemäß ganz besonders bevorzugt ist dabei, dass der Polysiloxangehalt des Polysiloxan-Polycarbonat-Blockcopolymers von 4 bis 8 Gew.-% beträgt, wobei der Polysiloxangehalt bezogen ist auf das Gesamtgewicht des Polysiloxan-Polycarbonat-Blockcopolymers.
Diese ganz besonders bevorzugte Ausführungsform des erfindungsgemäßen Verfahrens stellt eine achte Ausführungsform nach der oben dargestellten siebten Ausführungsform dar.

Erfindungsgemäß insbesondere ganz besonders bevorzugt ist dabei, dass der Polysiloxangehalt des Polysiloxan-Polycarbonat-Blockcopolymers von 4,5 bis 5,5 Gew.-% beträgt, wobei der Polysiloxangehalt bezogen ist auf das Gesamtgewicht des Polysiloxan-Polycarbonat-Blockcopolymers.

Diese ganz besonders bevorzugte Ausführungsform des erfindungsgemäßen Verfahrens stellt eine neunte Ausführungsform nach der oben dargestellten achten Ausführungsform dar.

Weiter erfindungsgemäß bevorzugt ist dabei, dass der OH-Gruppengehalt des Oligocarbonats, das in Schritt (1) bereitgestellt wird, von 1200 bis 2300 ppm, besonders bevorzugt von 1400 bis 2200 ppm beträgt.
Diese weiter bevorzugte Ausführungsform des erfindungsgemäßen Verfahrens stellt eine zehnte

Ausführungsform nach der oben dargestellten ersten Ausführungsform oder der oben dargestellten zweiten Ausführungsform dar.

Außerdem erfindungsgemäß bevorzugt ist dabei, dass in Schritt (1) das Reaktionsgemisch enthaltend ein Oligocarbonat mit einer relativen Lösungsviskosität von 1,08 bis 1,22, bevorzugt mit einer relativen Lösungsviskosität von 1,11 bis 1,22, besonders bevorzugt mit einer relativen Lösungsviskosität von 1,13 bis 1,20, und mit einem OH-Gruppengehalt von 1000 bis 2500 ppm, bevorzugt mit einem OH-Gruppengehalt von 1200 bis 2300 ppm, besonders bevorzugt mit einem OH-Gruppengehalt von 1400 bis 2200 ppm, und enthaltend ein Hydroxyaryl-terminertes Polysiloxan unter Einsatz von dynamischen und/oder statischen Mischern hergestellt wird.
Diese außerdem bevorzugte Ausführungsform des erfindungsgemäßen Verfahrens stellt eine elfte Ausführungsform nach der oben dargestellten ersten Ausführungsform oder der oben dargestellten zweiten Ausführungsform dar.

In dem Fall, dass die Anzahl der in Reihe geschalteter Dünnschichtverdampfer mindestens zwei beträgt, werden in Schritt (3) des Verfahrens bevorzugt folgende Verfahrensbedingungen eingehalten:
im ersten Dünnschichtverdampfer:
   (3.1.a) Scherrate zwischen der Außenkante eines rotierenden Wischerblattelements und der sich in axialer Richtung erstreckenden rotationssymmetrischen Innenfläche der Reaktionskammer des Dünnschichtverdampfers von 500 1/s bis 5000 1/s,
   (3.1.b) Druck in der Reaktionskammer von 1 mbara bis 10 mbara,
   (3.1.c) Temperatur des Reaktionsgemischs in der Reaktionskammer von 270 °C bis 350 °C,
   (3.1.d) Frequenz der Oberflächenerneuerung des Reaktionsgemischs von 10 bis 30 Hz,
und im letzten Dünnschichtverdampfer:
   (3.2.a) Scherrate der Außenkante der mindestens zwei rotierenden Wischerblattelemente und der sich in axialer Richtung erstreckenden rotationssymmetrischen Innenfläche der Reaktionskammer des Dünnschichtverdampfers von 500 1/s bis 4000 1/s, bevorzugt von 500 1/s bis 2000 1/s,
   (3.2.b) Druck in der Reaktionskammer von 0,1 mbara bis 3 mbara, bevorzugt 0,2 bis 2 mbara,
   (3.2.c) Temperatur des Reaktionsgemischs in der Reaktionskammer von 280 °C bis 370 °C,
   (3.2.d) Frequenz der Oberflächenerneuerung des Reaktionsgemischs von 10 bis 30 Hz.

Diese Ausführungsform des erfindungsgemäßen Verfahrens stellt eine zwölfte Ausführungsform nach der oben dargestellten zweiten Ausführungsform dar.

Erfindungsgemäß wird der Begriff "intermediäres Polysiloxan-Polycarbonat-Blockcopolymer", wie es beispielsweise in Schritt (3) erhalten wird, zur Abgrenzung vom Polysiloxan-Polycarbonat-Blockcopolymer, wie es beispielsweise in Schritt (6) erhalten wird, verwendet. Der Begriff "intermediär" wird demnach so verwendet, dass deutlich wird, dass das intermediäre Polysiloxan-Polycarbonat-Blockcopolymer ein geringeres Molekulargewicht aufweist als das Polysiloxan-Polycarbonat-Blockcopolymer. Damit weist das intermediäre Polysiloxan-Polycarbonat-Blockcopolymer eine geringere relative Lösungsviskoksität auf als das Polysiloxan-Polycarbonat-Blockcopolymer. Bevorzugt weist das intermediäre Polysiloxan-Polycarbonat-Blockcopolymer eine relative Lösungsviskosität von 1,20 bis 1,27. Dabei ist es verständlich, dass das Adjektiv "intermediär" im Begriff "intermediäres Polysiloxan-Polycarbonat-Blockcopolymer" sich auf die gebildeten Wiederholungseinheiten des Hydroxyaryl-terminierten Polysiloxans (welches bereits polymer ist) und des Oligocarbonats (welches bereits oligomer ist) bezieht und es sich insbesondere auch bei einem intermediären Polysiloxan-Polycarbonat-Blockcopolymer auch um ein "Polymer" handeln kann. In Abgrenzung zum Endprodukt weist das intermediäre Polysiloxan-Polycarbonat-Blockcopolymer jedoch weniger gebildete Wiederholungseinheiten auf. Es ist für den Fachmann klar, dass bei Einsatz eines Oligocarbonats mit einer geringeren relativen Lösungsviskosität in aller Regel auch ein intermediäres Polysiloxan-Polycarbonat-Blockcopolymer erhalten wird, dass eine geringere relative Lösungsviskosität aufweist. Es ist für den Fachmann auch klar, dass das intermediäre Polysiloxan-Polycarbonat-Blockcopolymer auch weiter aufkondensiertes Oligocarbonat enthält, das eine höhere relative Lösungsviskosität als das in Schritt (1) eingesetzte Oligocarbonat aufweist.

Die zwei in Reihe geschalteten Dünnschichtverdampfer werden dabei von einem Reaktionsgemisch zur Herstellung des Polysiloxan-Polycarbonat-Blockcopolymers nacheinander durchströmt und diese Dünnschichtverdampfer sind unmittelbar über Rohrleitungen miteinander verknüpft. Vorzugsweise ist kein weiterer Reaktor zwischen diesen zwei Dünnschichtverdampfernt vorhanden. Allerdings können in der Verbindung der Dünnschichtverdampfer Pumpen oder Mischelemente, beispielsweise statische oder dynamische Mischer, eingesetzt werden. Diese Pumpen oder diese Mischelemente werden nicht als Reaktoren angesehen, da der Zweck dieser Pumpen oder dieser Mischelementen lediglich eine mechanische Behandlung eines Stoffes ist. Nach dem zweiten Dünnschichtverdampfers kann noch ein weiterer Dünnschichtverdampfer oder können noch mehrere weitere Dünnschichtverdampfer folgen, die alle in Reihe geschaltet sind.

Bei Verwendung nur eines Dünnschichtverdampfers beträgt die Beaufschlagung mit Reaktionsgemisch pro Innenflächeneinheit der Reaktionskammer von 20 kg/m²h bis 100 kg/m²h Reaktionsgemisch. Bei Verwendung mehr als eines Dünnschichtverdampfers beträgt die Beaufschlagung mit Reaktionsgemisch pro Innenflächeneinheit der Summe der Innenflächen der Reaktionskammern der in Reihe geschalteten Dünnschichtverdampfer von 20 kg/m²h bis 100 kg/m²h Reaktionsgemisch; dies gilt insbesondere, wenn genau zwei in Reihe geschaltete Dünnschichtverdampfer für das erfindungsgemäße Verfahren verwendet werden.

Die Verwendung von Dünnschichtverdampfern zur Polykondensation von Polysiloxan-Polycarbonat-Blockcopolymeren ist prinzipiell bekannt, beispielsweise aus der bereits weiter oben erwähnten EP 864 599 B1 oder auch aus der EP 0 770 636 A2. Allerdings wird kein detailliertes Verfahren unter Einsatz von Dünnschichtverdampfern beschrieben, sondern nur die theoretische Möglichkeit, ein Verfahren über Dünnschichtverdampfer zu gestalten. Ausführungsbeispiele unter Verwendung von Dünnschichtverdampfern sind nicht geschildert. Es wird keine Lehre zum Handeln gegeben, wie das Verfahren derart geführt werden kann, dass ein Polysiloxan-Polycarbonat-Blockcopolymer mit feiner Polysiloxan-Domänengrößenverteilung in Kombination mit guter Fließfähigkeit hergestellt werden kann.

Ferner konnte gezeigt werden, dass die Verweilzeiten gegenüber der Verwendung von Hochviskosreaktoren oder Scheibenreaktoren durch die Verwendung mindestens eines Dünnschichtverdampfers deutlich verkürzt werden können. Das gilt auch, wenn mindestens zwei Dünnschichtverdampfer in Reihe geschaltet werden.

Dies ist überraschend, denn es sollte angenommen werden, dass durch die mindestens zwei in Reihe geschalteten Dünnschichtverdampfer wird die Gesamtverweilzeit des in Schritt (1) bereitgestellten Reaktionsgemischs und des daraus entstehenden Polysiloxan-Polycarbonat-Blockcopolymers in den mindestens zwei in Reihe geschalteten Dünnschichtverdampfern gegenüber der Verwendung nur eines Dünnschichtverdampfers verlängert würden. Dadurch stiege die thermische Belastung auf das entstehende Polysiloxan-Polycarbonat-Blockcopolymer. Dadurch wiederum sollte es zu unerwünschten Nebenreaktionen kommen, die zu einer nicht erwünschten Verfärbung, insbesondere Vergilbung, des Polysiloxan-Polycarbonat-Blockcopolymers und zu schlechteren mechanische Eigenschaften, insbesondere schlechterer Tieftemperaturschlagzähigkeit, eines Formteils führen sollten, das aus dem nach dem erfindungsgemäßen Verfahren hergestellten Polysiloxan-Polycarbonat-Blockcopolymers hergestellt wurde.

Ein Fachmann hätte also zu vermeiden versucht, ein Polysiloxan-Polycarbonat-Blockcopolymers unter Verwendung zweier oder mehr in Reihe geschalteter Dünnschichtverdampfer herzustellen.

Es wurde jedoch gefunden, dass bei einem Verfahren zur Herstellung eines Polysiloxan-Polycarbonat-Blockcopolymers aufweisend einen Polysiloxangehalt von 2 bis 15 Gew.-%, bevorzugt aufweisend einen Polysiloxangehalt von 3 bis 10 Gew.-%, besonders bevorzugt aufweisend einen Polysiloxangehalt von 4 bis 8 Gew.-%, ganz besonders bevorzugt aufweisend einen Polysiloxangehalt von 4,5 bis 5,5 Gew.-%, unter Verwendung von mindestens zwei Dünnschichtverdampfern gegenüber der Verwendung von nur einem Dünnschichtverdampfer sogar noch thermisch geringer belastende Verfahrensbedingungen eingestellt werden können.

Außerdem können bei der Verwendung zweier Dünnschichtverdampfern die Verfahrensparameter wie beispielsweise Frequenz der Oberflächenerneuerung, Temperatur, Druck oder Scherrate in einem weiteren Bereich variiert werden, so dass das Herstellverfahren weniger fehleranfällig ist und einfacher auf wechselnde Verfahrensbedingungen - beispielsweise unterschiedliche Merkmale des in Schritt (1) zugebenen Olicarbonats oder des in Schritt (1) zugebenen Hydroxyaryl-terminierten Polysiloxans - eingestellt werden kann.

Ein weiterer Gegenstand der vorliegenden Erfindung ist ein Polysiloxan-Polycarbonat-Blockcopolymer aufweisend folgende Merkmale:
- Polysiloxangehalt von 2 bis 15 Gew.-%, bezogen auf das Gesamtgewicht des Polysiloxan-Polycarbonat-Blockcopolymers,
- Die Polysiloxan-Domänen weisen eine feine Größenverteilung auf, d.h.:
   im Polysiloxan-Polycarbonat-Blockcopolymer ist der Volumenanteil an Polysiloxan-Domänen - gemessen am Gesamtvolumen der Polysiloxan-Domänen - , bei denen Durchmesser 100 nm überschreitet, geringer als 70 %, wobei gleichzeitig der Volumenanteil an Polysiloxan-Domänen, bei denen der Durchmesser 200 nm überschreitet, geringer als 30 % ist, wobei gleichzeitig der Volumenanteil an Polysiloxan-Domänen, bei denen der Durchmesser 500 nm überschreitet, geringer als 0,1 % ist; dabei beträgt die relative Lösungsviskosität von 1,38 bis 1,24, bevorzugt von 1,36 bis 1,26, besonders bevorzugt von 1,35 bis 1,27; auch hier wird diese relative Lösungsviskosität auch als gewünschte relative Lösungsviskosität bezeichnet.
- Bevorzugt ist im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 60 %, wobei gleichzeitig der Volumenanteil an Polysiloxan-Domänen, bei denen der Durchmesser 200 nm überschreitet, geringer als 20 % ist, wobei gleichzeitig der Volumenanteil an Polysiloxan-Domänen, bei denen der Durchmesser 500 nm überschreitet, geringer als 0,1 % ist; auch dabei beträgt die relative Lösungsviskosität von 1,38 bis 1,24, bevorzugt von 1,36 bis 1,26, besonders bevorzugt von 1,35 bis 1,27; auch hier wird diese relative Lösungsviskosität auch als gewünschte relative Lösungsviskosität bezeichnet.
- Besonders bevorzugt ist im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 50 %, wobei gleichzeitig der Volumenanteil an Polysiloxan-Domänen, bei denen der Durchmesser 200 nm überschreitet, geringer als 10 % ist, wobei gleichzeitig der Volumenanteil an Polysiloxan-Domänen, bei denen der Durchmesser 500 nm überschreitet, geringer als 0,1 % ist; auch dabei beträgt die relative Lösungsviskosität von 1,38 bis 1,24, bevorzugt von 1,36 bis 1,26, besonders bevorzugt von 1,35 bis 1,27; auch hier wird diese relative Lösungsviskosität auch als gewünschte relative Lösungsviskosität bezeichnet.
- Ganz besonders bevorzugt ist im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 40 %, wobei gleichzeitig der Volumenanteil an Polysiloxan-Domänen, bei denen der Durchmesser 200 nm überschreitet, geringer als 1 % ist, wobei gleichzeitig der Volumenanteil an Polysiloxan-Domänen, bei denen der Durchmesser 500 nm überschreitet, geringer als 0,1 % ist; ; auch dabei beträgt die relative Lösungsviskosität von 1,38 bis 1,24, bevorzugt von 1,36 bis 1,26, besonders bevorzugt von 1,35 bis 1,27; auch hier wird diese relative Lösungsviskosität auch als gewünschte relative Lösungsviskosität bezeichnet.

Bevorzugt weist das erfindungsgemäße Polysiloxan-Polycarbonat-Blockcopolymer von 3 bis 10 Gew.-%, besonders bevorzugt einen Polysiloxangehalt von 4 bis 8 Gew.-% auf.

Sofern das nach dem erfindungsgemäßen Verfahren hergestellte Polysiloxan-Polycarbonat-Blockcopolymer einen Polysiloxangehalt von 4,5 bis 5,5 Gew.-% aufweist, was ganz besonders bevorzugt ist, weist dieses Polysiloxan-Polycarbonat-Blockcopolymers eine relative Lösungsviskosität von 1,24 bis 1,34, bevorzugt von 1,26 bis 1,33, besonders bevorzugt von 1,27 bis 1,32 auf, wobei auch hier gilt:
Die Polysiloxan-Domänen weisen eine feine Größenverteilung auf, d.h.:
im Polysiloxan-Polycarbonat-Blockcopolymer ist der Volumenanteil an Polysiloxan-Domänen - gemessen am Gesamtvolumen der Polysiloxan-Domänen - , bei denen der Durchmesser 100 nm überschreitet, geringer als 70 %, wobei gleichzeitig der Volumenanteil an Polysiloxan-Domänen, bei denen der Durchmesser 200 nm überschreitet, geringer als 30 % ist, wobei gleichzeitig der Volumenanteil an Polysiloxan-Domänen, bei denen der Durchmesser 500 nm überschreitet, geringer als 0,1 % ist.

Bevorzugt ist im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 60 %, wobei gleichzeitig der Volumenanteil an Polysiloxan-Domänen, bei denen der Durchmesser 200 nm überschreitet, geringer als 20 % ist, wobei gleichzeitig der Volumenanteil an Polysiloxan-Domänen, bei denen der Durchmesser 500 nm überschreitet, geringer als 0,1 % ist.

Besonders bevorzugt ist im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 50 % ist, wobei gleichzeitig der Volumenanteil an Polysiloxan-Domänen, bei denen der Durchmesser 200 nm überschreitet, geringer als 10 % ist, wobei gleichzeitig der Volumenanteil an Polysiloxan-Domänen, bei denen der Durchmesser 500 nm überschreitet, geringer als 0,1 % ist.

Ganz besonders bevorzugt ist im Polysiloxan-Polycarbonat-Blockcopolymer der Volumenanteil an Polysiloxan-Domänen - gemessen am Gesamtvolumen der Polysiloxan-Domänen - , bei denen der Durchmesser 100 nm überschreitet, geringer als 40 %, wobei gleichzeitig der Volumenanteil an Polysiloxan-Domänen, bei denen der Durchmesser 200 nm überschreitet, geringer als 1 % ist, wobei gleichzeitig der Volumenanteil an Polysiloxan-Domänen, bei denen der Durchmesser 500 nm überschreitet, geringer als 0,1 % ist.

Durch die günstige relative Lösungsviskosität eines nach dem erfindungsgemäßen Verfahren hergestellten Polysiloxan-Polycarbonat-Blockcopolymers mit einem Polysiloxangehalt von 4,5 bis 5,5 Gew.-% treten die oben genannten Vorteile bei einem solchen Polysiloxan-Polycarbonat-Blockcopolymers in besonderem Maße auf. Insbesondere lässt sich ein solches Polysiloxan-Polycarbonat-Blockcopolymers besonders gut verarbeiten, beispielsweise durch Spritzguss oder Extrusion.

Auch weist ein nach dem erfindungsgemäßen Verfahren hergestelltes Polysiloxan-Polycarbonat-Blockcopolymer bis -60°C ein zähes Bruchverhalten im Kerbschlagtest nach ISO 7391 / ISO 180A auf, sogar noch bei niedrigen Polysiloxangehalten.

Ein weiterer Gegenstand der vorliegenden Erfindung ist die Verwendung des erfindungsgemäßen Polysiloxan-Polycarbonat-Blockcopolymers zur Herstellung von Formkörpern, insbesondere durch Spritzguss oder Extrusion.

Ein weiterer Gegenstand der vorliegenden Erfindung ist die Verwendung des erfindungsgemäßen Polysiloxan-Polycarbonat-Blockcopolymers zur Herstellung von Gehäusen, Helmen, spülmaschinenresistenten Haushaltsgeräten, Sichtscheiben von Wasserkochern, Bedienknöpfen, Schnappverschlüssen, Kuchen- und Schokoladenformen, Steckern für Photovoltaikanlagen, Kupplungen für Photovoltaikanlagen.

Hinsichtlich der Verwendung zur Herstellung von Gehäusen ist das erfindungsgemäße Polysiloxan-Polycarbonat-Blockcopolymers zur Herstellung von Gehäusen für folgende Gegenstände geeignet:
medizinische Geräte, mobile elektrische Handgeräte, mobile Scanner, mobile Play-Stations, mobile Music-Player, Wearables, Sensoren oder Computergeräte für das Internet Of Things, mobile elektrische Ladegeräte, mobile elektrische Adapter, Steuerungsanalagen für den Anlagen- und Maschinebau, Smart-Meter, Mobilfunkgeräte, Tablet-Computer, Ladestationen für Elektrogeräte, Antennengehäuse für 5G Basisstationen, Elektroanwendungen im Außenbereich, elektrische Anschlusskästen, Geldautomaten, Parkautomaten.

Sowohl bei der ersten Ausführungsform des erfindungsgemäßen Verfahrens als auch bei der zweiten Ausführungsform des erfindungsgemäßen Verfahrens erfolgt die Herstellung des in Schritt (1) des erfindungsgemäßen Verfahrens eingesetzten Oligocarbonats bevorzugt über das Schmelzeumesterungsverfahren, beispielsweise wie in WO2019238419A1 offenbart, deren Offenbarung in Bezug auf die Herstellung hiermit durch Bezugnahme in die vorliegende Beschreibung aufgenommen wird. Auch ist die Herstellung eines für Schritt (1) des erfindungsgemäßen Verfahrens brauchbaren Oligocarbonats in der DE10119851A1, der WO02077066A1, der WO02077067A2 oder der WO02085967A1 beschrieben.

Zum Austragen des ausreagierten schmelzflüssigen Polysiloxan-Polycarbonat-Blockcopolymers aus dem letzten der in Reihe geschalteten Dünnschichtverdampfer - vorzugsweise also aus dem einzigen Dünnschichtverdampfer, sofern nur ein Dünnschichtverdampfer verwendet wird, oder aus dem zweiten der beiden Dünnschichtverdampfer, sofern genau zwei in Reihe geschaltete Dünnschichtverdampfer verwendet werden - kann eine Einwellenschnecke, eine Zweiwellenschnecke oder eine Zahnradpumpe zum Einsatz kommen. Gegebenenfalls werden nach dem Austragen des schmelzflüssigen Polysiloxan-Polycarbonat-Blockcopolymers aus dem letzten der in Reihe geschalteten Dünnschichtverdampfer noch Additive und/oder Zuschlagsstoffe zugeführt und eingemischt. Die Einmischung der Zuschlagstoffe kann in dem Austragsaggregat oder in einem dem Austragsaggregat nachgeschalteten Statikmischer erfolgen. Die Schmelze des Polysiloxan-Polycarbonat-Blockcopolymers wird anschließend über eine oder mehrere Düsen ausgeformt und mit einer Granuliervorrichtung nach dem Stand der Technik zerkleinert.

Durch die beim durch das erfindungsgemäße Verfahren hergestellten Polysiloxan-Polycarbonat-Blockcopolymer feinere Polysiloxan-Domänengrößenverteilung wird ein verbessertes ästhetisches Erscheinungsbild des Polysiloxan-Polycarbonat-Blockcopolymers erhalten, beispielsweise eine homogenere Oberflächenstruktur und geringere Ausbildung von Fließlinien oder Streifenbildung oder unerwünschten optischen Interferenzen in einem durch Spritzguss hergestellten Formkörper aus dem erfindungsgemäß hergestellten Polysiloxan-Polycarbonat-Blockcopolymer. Die Tendenz zur Entmischung der Polysiloxanphase von der Polycarbonatphase wird reduziert und das Verarbeitungsfenster für den Spritzguss des erfindungsgemäß hergestellten Polysiloxan-Polycarbonat-Blockcopolymerisats wird verbreitert. Auch wird die Tendenz zur Delamination bei einem aus dem erfindungsgemäß hergestellten Polysiloxan-Polycarbonat-Blockcopolymerisats hergestellten Formkörper verringert.

Dies gilt insbesondere, wenn das nach dem erfindungsgemäßen Verfahren hergestellte Polysiloxan-Polycarbonat-Blockcopolymer einen Polysiloxangehalt von 4,5 bis 5,5 Gew.-% aufweist.

Außerdem weisen Formkörper, die aus dem erfindungsgemäß hergestellten Polysiloxan-Polycarbonat-Blockcopolymerisats hergestellt wurden, bis -60°C ein zähes Bruchverhalten im Kerbschlagtest nach ISO 7391 / ISO 180A auf, sogar noch bei niedrigen Polysiloxangehalten.

Das erfindungsgemäß einzusetzende Oligocarbonat und das erfindungsgemäß einzusetzende Hydroxyaryl-terminierte Polysiloxan kann in Schritt (3) mittels Katalysatoren zur Reaktion gebracht werden. Eine Reaktionsführung ist zwar auch ohne Katalysator prinzipiell möglich, jedoch müssen dann ggf. höhere Temperaturen oder längere Verweilzeiten in Kauf genommen werden.

Für das erfindungsgemäße Verfahren geeignete Katalysatoren sind z.B.:
Ammoniumkatalysatoren, wie beispielsweise Tetramethylammoniumhydroxid, Tetramethylammoniumacetat, Tetramethylammoniumfluorid, Tetramethylammoniumtetraphenylboranat, Dimethyldiphenylammoniumhydroxid, Tetraethylammoniumhydroxid, Cethyltrimethylammoniumtetraphenylboranat und Cethyltrimethylammoniumphenolat. Insbesondere geeignet sind außerdem Phosphoniumkatalysatoren der Formel (K): 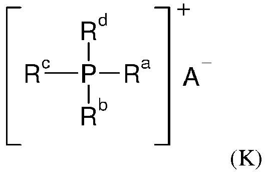 wobei R^{a}, R^{b}, R^{c} und R^{d} dieselben oder verschiedene C1-C10-Alkyle, C6-C14-Aryle, C7-C15-Arylalkyle oder C5-C6-Cycloalkyle, bevorzugt Methyl oder C6-C14-Aryle, besonders bevorzugt Methyl oder Phenyl sein können, und A⁻ ein Anion wie Hydroxyd, Sulfat, Hydrogensulfat, Hydrogencarbonat, Carbonat oder ein Halogenid, bevorzugt Chlorid oder ein Alkylat bzw. Arylat der Formel -OR sein kann, wobei R ein C6-C14-Aryl, C7-C15-Arylalkyl oder C5-C6-Cycloalkyl, bevorzugt Phenyl sein kann.

Besonders bevorzugte Katalysatoren sind Tetraphenylphosphoniumchlorid, Tetraphenylphosphoniumhydroxid oder Tetraphenylphosphoniumphenolat; ganz besonders bevorzugt ist Tetraphenylphosphoniumphenolat. Besonders bevorzugt werden die Alkalimetallsalze oder Erdalkalimetallsalze dieser Ammonium- und/oder Phosphoniumkatalysatoren eingesetzt.

Der Katalysator wird bevorzugt in Mengen von 0,0001 bis 1,0 Gew.-%, bevorzugt von 0,001 bis 0,5 Gew.-%, insbesondere bevorzugt von 0,005 bis 0,3 Gew.-%, und ganz besonders bevorzugt von 0,01 bis 0,15 Gew.-%, bezogen auf das Gewicht des eingesetzten Oligocarbonats eingesetzt.

Der Katalysator kann allein oder als Katalysatorgemisch eingesetzt werden und in Substanz oder als Lösung, beispielsweise in Wasser oder in Phenol, z.B. als Mischkristall mit Phenol, zugesetzt werden. Er kann beispielsweise mittels Masterbatch bevorzugt mit dem Oligocarbonat in die Reaktion eingeführt werden oder getrennt davon bzw. noch zusätzlich hinzugefügt werden.

Ebenso ist es bevorzugt, dass das Oligocarbonat und das Hydroxyaryl-terminierte Polysiloxan in Anwesenheit eines organischen oder anorganischen Salzes einer schwachen Säuren mit einem pK_{A}-Wert im Bereich von 3 bis 7 (25 °C) zur Reaktion gebracht werden. Dieses Salz kann auch als Co-Katalysator bezeichnet werden. Geeignete schwache Säuren umfassen Carbonsäuren, bevorzugt C2-C22-Carbonsäuren wie beispielsweise Essigsäure, Propansäure, Ölsäure, Stearinsäure, Laurinsäure, Benzoesäure, 4-Methoxybenzoesäure, 3-Methylbenzoesäure, 4-tert-Butylbenzoesäure, p-Toluolessigsäure, 4-Hydroxybenzoesäure und Salicylsäure, Partialester von Polycarbonsäuren, wie beispielsweise Monoester der Bernsteinsäure, Partialester von Phosphorsäuren, wie beispielsweise mono-oder diorganische Phosphorsäureester, verzweigte aliphatische Carbonsäuren, wie beispielsweise 2,2-Dimethylpropionsäure, 2,2-Dimethylbutansäure, 2,2-Dimethylpentansäure und 2-Ethylhexansäure.

Geeignete organische oder anorganische Salze sind ausgewählt aus oder abgeleitet von Hydrogencarbonat, Kaliumhydrogencarbonat, Lithiumhydrogencarbonat, Natriumcarbonat, Kaliumcarbonat, Lithiumcarbonat, Natriumacetat, Kaliumacetat, Lithiumacetat, Natriumstearat, Kaliumstearat, Lithiumstearat, Natriumoleat, Kaliumoleat, Lithiumoleat, Natriumbenzoat, Kaliumbenzoat, Lithiumbenzoat, Dinatrium, Dikalium oder Dilithiumsalze von Bisphenol A. Des Weiteren können die Salze Calciumhydrogencarbonat, Bariumhydrogencarbonat, Magnesiumhydrogencarbonat, Strontiumhydrogencarbonat, Calciumcarbonat, Bariumcarbonat, Magnesiumcarbonat, Strontiumcarbonat, Calciumacetat, Bariumacetat, Magnesiumacetat, Strontiumacetat, Calciumstearat, Bariumstearat, Magnesiumstearat, Strontiumstearat und die entsprechenden Oleate umfassen. Alle diese Salze können alleine oder in beliebigen Mischungen verwendet werden.

Besonders bevorzugt ist das Salz ausgewählt aus der Gruppe, bestehend aus Alkalimetallsalzen, Erdalkalimetallsalzen und Phosphoniumsalzen von Carbonsäuren. In einer weiteren bevorzugten Ausführungsform ist das organische oder anorganische Salz von einer Carbonsäure abgeleitet.

Die organischen oder anorganischen Salze werden bevorzugt in Mengen von 0,08 bis 10 ppm und ganz besonders bevorzugt von 0,1 bis 5 ppm eingesetzt, bezogen auf das Gesamtgewicht des Polysiloxans und des organischen oder anorganischen Salzes.

In einer bevorzugten Ausführungsform ist das organische oder anorganische Salz ein Natriumsalz, bevorzugt ein Natriumsalz einer Carbonsäure. Hier wird es bevorzugt in einer solchen Menge eingesetzt, dass der Natriumgehalt in dem resultierenden Polysiloxan-Polycarbonat-Blockcopolymer in Bereich von 0,003 ppm bis 0,5 ppm liegt, basierend auf dem Gesamtgewicht des Polysiloxan-Polycarbonat-Blockcopolymers, das gebildet werden soll. Bevorzugt wird der Co-Katalysator mit einem geeigneten Lösemittel im Hydroxyaryl-terminerten Polysiloxan zur Lösung gebracht. Der Natriumgehalt des Polysiloxan-Polycarbonat-Blockcopolymers kann beispielsweise durch Atomabsorptionsspektroskopie bestimmt werden.

Es ist ein Vorteil, dass der Natriumgehalt im erhaltenen Polysiloxan-Polycarbonat-Blockcopolymer geringer ist als im Stand der Technik, da höhere Natriumgehalte unter thermischer Belastung zu einem verstärkten Abbau des Polysiloxan-Polycarbonat-Blockcopolymers führen können.

Das organische oder anorganische Salz kann allein oder in beliebigen Mischungen eingesetzt werden. Es kann als Feststoff oder in Lösung zugegeben werden. In einer bevorzugten Ausführungsform wird das organische oder anorganische Salz in Form einer Mischung, enthaltend das Hydroxyaryl-terminierte Polysiloxan und das organische oder anorganische Salz, zugegeben.

Die Katalysatoren können allein oder im Gemisch eingesetzt werden und in Substanz oder als Lösung, beispielsweise in Wasser oder in Phenol, zugesetzt werden.

Insbesondere bevorzugt wird der mindestens eine Katalysator im Oligocarbonat und der Co-Katalysator im Hydroxyaryl-terminierten Polysiloxan eingemischt.

### Oligocarbonat (Komponente A)

Ein Oligocarbonat (im Folgenden auch als Komponente (A) bezeichnet) im Sinne der vorliegenden Erfindung ist bevorzugt ein Homo-Oligocarbonat. Das Oligocarbonat kann in bekannter Weise linear oder verzweigt sein. Die Herstellung des erfindungsgemäß eingesetzten Oligocarbonats erfolgt wie oben beschrieben bevorzugt nach dem Schmelzeumesterungsverfahren, insbesondere gemäß WO2019238419A1. Auch ist die Herstellung eines für das erfindungsgemäße Verfahren brauchbaren Oligocarbonats in der DE10119851A1, der WO02077066A1, der WO02077067A2 oder der WO02085967A1 beschrieben.

Zur Herstellung des erfindungsgemäßen Polysiloxan-Polycarbonat-Blockcopolymers wird vorzugsweise ein Oligocarbonat mit einem Molekulargewicht (Mw) von 5.000 bis 20.000 g/mol, besonders bevorzugt von 8.000 bis 19.000 g/mol und insbesondere bevorzugt von 10.000 bis 18.000 g/mol eingesetzt. Vorzugweise weist dieses Oligocarbonat einen Gehalt an phenolischen OH-Gruppen von 1000 ppm bis 2500 ppm, bevorzugt 1300 bis 2300, und insbesondere bevorzugt von 1400 bis 2200 ppm auf. Die phenolischen OH-Gruppen werden bevorzugt mittels IR-Spektroskopie bestimmt. Im Rahmen der vorliegenden Erfindung sind unter ppb und ppm - soweit nichts anderes angegeben - Gewichtsteile zu verstehen.

Die für die Bestimmung der für das Oligocarbonat, das Hydroxyaryl-terminierte Polysiloxan oder das Polysiloxan-Polycarbonat-Blockcopolymer im Rahmen der Erfindung angegebenen Molmassen verwendete Methode ist die Methode Nr. 2301-0257502-09D der Currenta GmbH & Co. OHG, die jederzeit bei der Currenta GmbH & Co. OHG angefragt werden kann.

Des Weiteren ist es bevorzugt, dass zur Herstellung des erfindungsgemäßen Polysiloxan-Polycarbonat-Blockcopolymers ein Oligocarbonat mit einer relativen Lösungsviskosität von 1,08 bis 1,22 eingesetzt wird. Dabei wird die relative Lösungsviskosität (ηrel; auch als eta rel bezeichnet) bevorzugt in Dichlormethan bei einer Konzentration von 5 g/l bei 25 °C mit einem Ubbelohdeviskosimeter bestimmt.

Bevorzugte Diphenole zur Herstellung des Oligocarbonats sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,2-Bis-(3-methyl, 4-hydroxyphenyl)-propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol. 1,1-Bis-(4-hydroxyphenyl)-cyclohexan und 1,1-Bis-(4-hydroxyphenyl)-3,3,5-trimethylcyclohexan.

Besonders bevorzugte Diphenole sind 2,2-Bis-(4-hydroxyphenyl)-propan (BPA), Hydrochinon, 1,1-Bis-(4-hydroxyphenyl)-3,3,5-trimethylcyclohexan und 2,2-Bis-(3-methyl, 4-hydroxyphenyl)-propan.

Insbesondere ist das Oligocarbonat ein Homo-Oligocarbonat auf Basis von Bisphenol A. Ganz besonders bevorzugt enthält dieses Homo-Oligocarbonat Phenol als Endgruppe.

Darüber hinaus ist ein Oligocarbonat bevorzugt, das als Endgruppen Phenol trägt (Phenyl-terminiertes Oligocarbonat). Tert. Butylphenol sowie Cumylphenol sind weitere mögliche Endgruppen.

Das nach dem erfindungsgemäßen Verfahren erhältliche Polysiloxan-Polycarbonat-Blockcopolymer, enthält bevorzugt mindestens eine, besonders bevorzugt mehrere der folgenden Strukturen (4) bis (7): 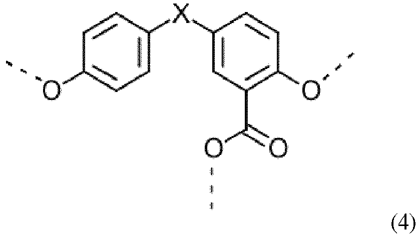 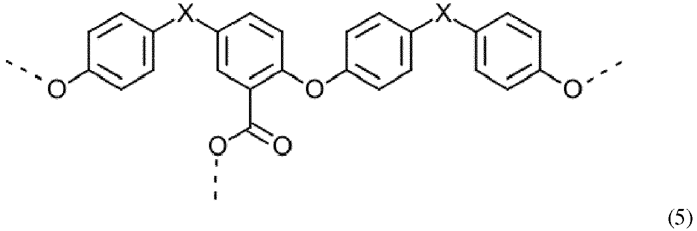 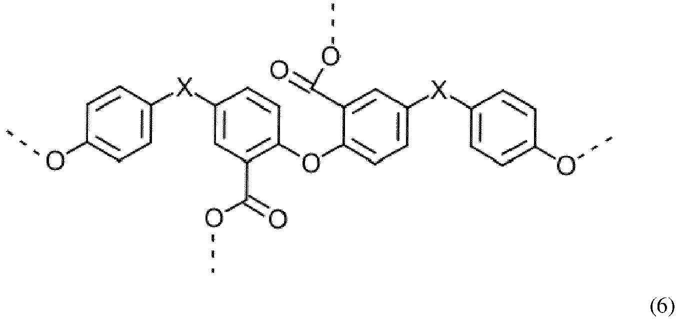 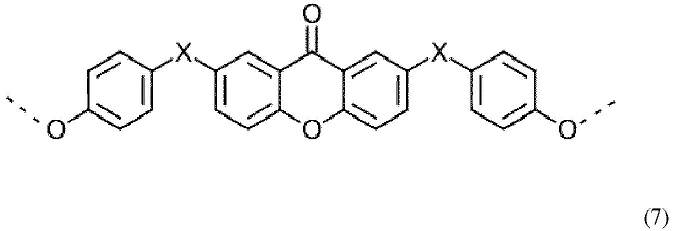 in denen die Phenylringe unabhängig voneinander ein- oder zweifach mit C1 - C8 Alkyl, Halogen, bevorzugt C1 bis C4 Alkyl, besonders bevorzugt mit Methyl substituiert sein können und X für eine Einfachbindung, C1 bis C6 Alkylen, C2 bis C5 Alkyliden oder C5 bis C6 Cycloalkyliden, bevorzugt für eine Einfachbindung oder C1 bis C4 Alkylen und insbesondere bevorzugt für Isopropyliden stehen, wobei die Menge der Struktureinheiten (4) bis (7) in Summe (bevorzugt bestimmt durch Totalverseifung mittels quantitativer HPLC) im Allgemeinen im Bereich von 50 bis 1000 ppm, bevorzugt im Bereich von 80 bis 850 ppm beträgt. Damit enthält auch das erfindungsgemäß hergestellte Polysiloxan-Polycarbonat-Blockcopolymer bevorzugt mindestens eine, besonders bevorzugt mehrere der oben genannten Strukturen (4) bis (7).

Um die Menge der Umlagerungsstrukturen zu bestimmen, wird das jeweilige Polysiloxan-Polycarbonat-Blockcopolymer einer Totalverseifung unterzogen und so die entsprechenden Abbauprodukte der Formeln (4a) bis (7a) gebildet, deren Menge mit HPLC bestimmt wird. Dies kann z.B. wie folgt geschehen: Eine Polysiloxan-Polycarbonat-Blockcopolymerprobe wird mittels Natriummethylat unter Rückfluss verseift. Die entsprechende Lösung wird angesäuert und zur Trockne eingeengt. Der Trocknungsrückstand wird in Acetonitril gelöst und die phenolischen Verbindungen der Formel (4a) bis (7a) mittels HPLC mit UV-Detektion bestimmt, wobei die Verbindung der Formel (4a) ein Abbauprodukt der Verbindung der Formel (4) ist, und wobei die Verbindung der Formel (5a) ein Abbauprodukt der Verbindung der Formel (5) ist, und wobei die Verbindung der Formel (6a) ein Abbauprodukt der Verbindung der Formel (6) ist, und wobei die Verbindung der Formel (7a) ein Abbauprodukt der Verbindung der Formel (7)ist:

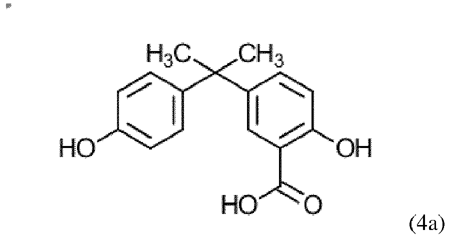

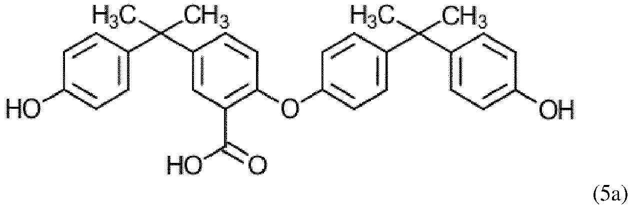

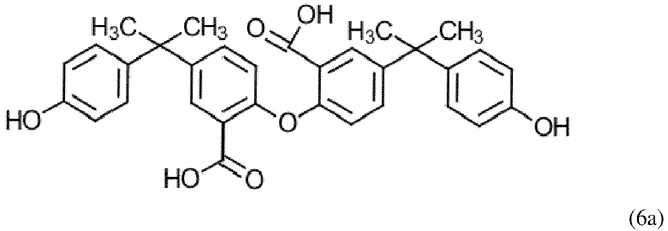

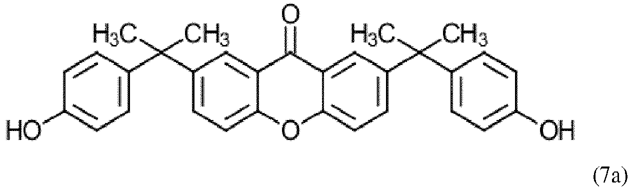

Bevorzugt beträgt die Menge der dabei freigesetzten Verbindung der Formel (4a) 10 bis 500 ppm, besonders bevorzugt 30 bis 300 ppm.

Bevorzugt beträgt die Menge der dabei freigesetzten Verbindung der Formel (5a) 0 (d.h. unterhalb der Nachweisgrenze von 10 ppm) bis 100 ppm, besonders bevorzugt 1 bis 50 ppm.

Bevorzugt beträgt die Menge der dabei freigesetzten Verbindung der Formel (6a) 1 (d.h. unterhalb der Nachweisgrenze von 10 ppm) bis 100 ppm, weiter bevorzugt 1 bis 50 ppm.

Bevorzugt beträgt die Menge der dabei freigesetzten Verbindung der Formel (7a) 10 (d.h. an der Nachweisgrenze von 10 ppm) bis 300 ppm, bevorzugt 20 bis 250 ppm.

### Hydroxyaryl-terminiertes Polysiloxan (Komponente B)

Das erfindungsgemäß eingesetzte Polysiloxan ist Hydroxyaryl-terminiert. Dies bedeutet, dass mindestens ein Ende, bevorzugt mindestens 2 Enden, besonders bevorzugt alle Enden (falls mehr als 2 Enden vorhanden sind) des Polysiloxans eine OH-Endgruppe aufweisen.

Komponente B ist bevorzugt ein Hydroxyaryl-terminiertes Polysiloxan der Formel (1) 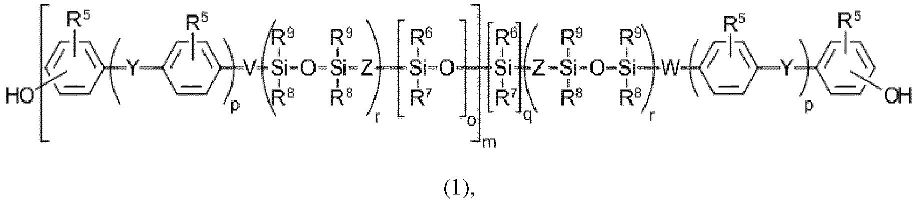 wobei
R⁵ für Wasserstoff oder C₁- bis C₄- Alkyl, C₁- bis C₃-Alkoxy, vorzugsweise für Wasserstoff; Methoxy oder Methyl, steht,
R⁶, R⁷, R⁸ und R⁹ jeweils unabhängig voneinander für C₁- bis C₄-Alkyl oder C₆- bis C₁₂-Aryl, vorzugsweise für Methyl oder Phenyl stehen,
Y für eine Einfachbindung, SO₂-, -S-, -CO-, -O-, C₁- bis C₆-Alkylen, C₂- bis C₅-Alkyliden, C₆- bis C₁₂-Arylen, welches gegebenenfalls mit weiteren Heteroatome enthaltenden aromatischen Ringen kondensiert sein kann oder für einen C₅- bis C₆-Cycloalkylidenrest, der ein- oder mehrfach mit C₁- bis C₄-Alkyl substituiert sein kann, bevorzugt für eine Einfachbindung, -O-, Isopropyliden oder für einen C₅- bis C₆-Cycloalkylidenrest, der ein- oder mehrfach mit C₁- bis C₄-Alkyl substituiert sein kann, steht,
V für Sauerstoff, C₂- bis C₆-Alkylen oder C₃- bis C₆-Alkyliden, bevorzugt für Sauerstoff oder C₃-Alkylen,
p, q und r jeweils unabhängig für 0 oder 1 stehen,
wenn q = 0: W für eine Einfachbindung steht und bevorzugt gleichzeitig r = 0 ist,
wenn q = 1 und r = 0 ist: W für Sauerstoff, C₂- bis C₆-Alkylen oder C₃- bis C₆-Alkyliden, bevorzugt für Sauerstoff oder C₃-Alkylen steht,
wenn q = 1 und r = 1 ist: W und V jeweils unabhängig für Sauerstoff oder C₂- bis C₆-Alkylen oder C₃- bis C₆-Alkyliden, bevorzugt C₃-Alkylen steht,
Z für ein C₁- bis C₆-Alkylen, bevorzugt C₂-Alkylen steht,
o für eine durchschnittliche Anzahl von Wiederholungseinheiten von 10 bis 500, bevorzugt 10 bis 100 steht, und
m für eine durchschnittliche Anzahl von Wiederholungseinheiten von 1 bis 10, bevorzugt 1 bis 6, weiter bevorzugt 1,5 bis 5 steht. Ebenso ist es möglich, dass Diphenole verwendet werden, in denen zwei oder mehrere Siloxanblöcke der allgemeinen Formel (1a) über Terephthalsäure und/oder Isophthalsäure miteinander unter Ausbildung von Estergruppen verknüpft sind.

Insbesondere bevorzugt sind (Poly)Siloxane der Formeln (2) und (3) 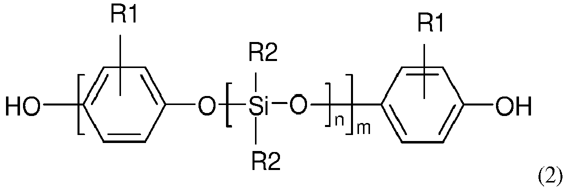 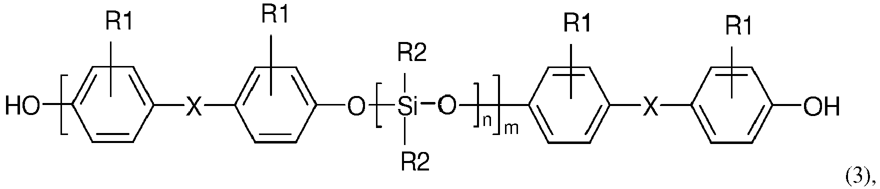
wobei R1 für Wasserstoff, C₁- bis C₄-Alkyl, vorzugsweise für Wasserstoff oder Methyl steht und insbesondere bevorzugt für Wasserstoff,
R2 unabhängig voneinander für Aryl oder Alkyl, bevorzugt für Methyl,
X für eine Einfachbindung, -SO₂-, -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht,
X bevorzugt für eine Einfachbindung, C₁- bis C₅-Alkylen, C₂- bis C₅-Alkyliden, C₅- bis C₁₂-Cycloalkyliden, -O-, -SO- -CO-, -S-, -SO₂-, besonders bevorzugt steht X für eine Einfachbindung, Isopropyliden, C₅- bis C₁₂-Cycloalkyliden oder Sauerstoff, und ganz besonders bevorzugt für Isopropyliden steht,
n eine durchschnittliche Zahl von 10 bis 400, bevorzugt 10 und 100, insbesondere bevorzugt 15 bis 50 bedeutet und
m für eine durchschnittliche Zahl von 1 bis 10, bevorzugt von 1 bis 6 und insbesondere bevorzugt von 1,5 bis 5 steht.

Ebenso bevorzugt kann der Siloxanblock von folgender Struktur abgeleitet sein 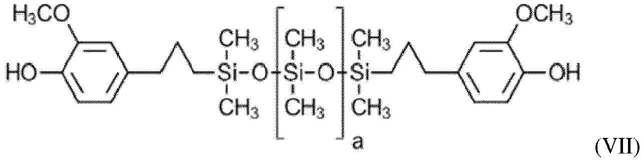 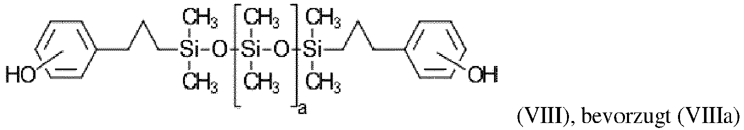 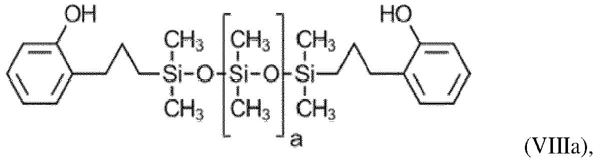 oder 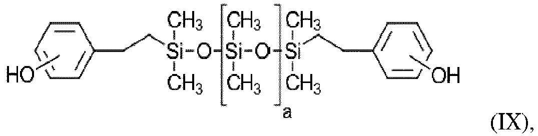 wobei a in Formel (VII), (VIII) und (IX) für eine durchschnittliche Zahl von 10 bis 400, bevorzugt 10 bis 100 und besonders bevorzugt für 15 bis 50 steht.

Dabei ist es ebenso bevorzugt, dass mindestens zwei gleiche oder verschiedene der Siloxanblöcke der allgemeinen Formeln (VII), (VIII) oder (IX) über Terephthalsäure und/oder Isophthalsäure miteinander unter Ausbildung von Estergruppen verknüpft sind.

Ebenso ist es bevorzugt, wenn in der Formel (1a) p = 0 ist, V für C₃-Alkylen steht, r = 1 ist, Z für C₂-Alkylen steht, R⁸ und R⁹ für Methyl stehen, q = 1 ist, W für C₃-Alkylen steht, m = 1 ist, R⁵ für Wasserstoff oder C₁- bis C₄-Alkyl, vorzugsweise für Wasserstoff oder Methyl, steht, R⁶ und R⁷ jeweils unabhängig voneinander für C₁- bis C₄-Alkyl, vorzugsweise für Methyl stehen und o für 10 bis 500 steht.

Die Herstellung eines Hydroxyaryl-terminierten Polysiloxans nach einer der Formeln (1) bis (3) ist beispielsweise in der EP 0 122 535 A2, der US 2013 026 7665 A1 oder der WO 2015/052229 A1 beschrieben.

Das Hydroxyaryl-terminierte Polysiloxan der Formel (1), (2) oder (3) oder auch (VII) oder (VIII) wird von 0,5 bis 50 Gew.-%, bevorzugt von 1 bis 40 Gew.-%, insbesondere bevorzugt von 2 bis 20 Gew.-%, und ganz besonders bevorzugt von 2,5 bis 10 Gew.-%, jeweils bezogen auf die Summe der Massen des Oligocarbonats und des Hydroxyaryl-terminierten Polysiloxans, eingesetzt.

Die nach dem erfindungsgemäßen Verfahren erhältlichen Polysiloxan-Polycarbonat-Blockcopolymere und die weiter daraus hergestellten Polymerzusammensetzungen können in für thermoplastische Polymere, insbesondere Polycarbonate, bekannter Weise zu beliebigen Formkörpern verarbeitet werden.

Die nach dem erfindungsgemäßen Verfahren erhältlichen Polysiloxan-Polycarbonat-Blockcopolymere und die weiter daraus hergestellten Polymerzusammensetzungen können in diesem Zusammenhang beispielsweise durch Heißpressen, Spinnen, Blasformen, Tiefziehen, Extrudieren oder Spritzgießen in Erzeugnisse, Formkörper oder geformte Gegenstände (zusammengefasst als Formteil) überführt werden. Von Interesse ist auch die Verwendung in Mehrschichtsystemen. Das Aufbringen der erfindungsgemäß erhältlichen Zusammensetzung kann, z.B. bei einem Mehrkomponentenspritzguss oder als Substrat für eine Coextrusions-Schicht eingesetzt werden. Das Aufbringen kann aber auch auf den fertig geformten Grundkörper geschehen, z.B. durch Lamination mit einem Film oder durch Beschichtung mit einer Lösung.

Platten beziehungsweise Formkörper aus Basis- und optionaler Deckschicht / optionalen Deckschichten (Mehrschichtsysteme) können durch (Co)extrusion, Direct Skinning, Direct Coating, Insert Moulding, Folienhinterspritzen, oder sonstige dem Fachmann bekannte geeignete Verfahren hergestellt werden.

Das nach dem erfindungsgemäßen Verfahren erhältliche Polysiloxan-Polycarbonat-Blockcopolymer und die und die weiter daraus hergestellten Polymerzusammensetzungen, insbesondere Polycarbonatzusammensetzungen, sind überall dort verwendbar, wo die bekannten aromatischen Polycarbonate bislang Verwendung finden und wo zusätzlich gute Fließfähigkeit gepaart mit verbesserten Entformungsverhalten und hoher Zähigkeit bei niedrigen Temperaturen und verbesserter Chemikalienresistenz erforderlich sind, wie z. B. zur Herstellung großer Kraftfahrzeug-Außenteile und Schaltkästen für den Außeneinsatz, von Platten, Hohlkammerplatten, von Teilen für Elektrik und Elektronik sowie von optischen Speichern. So können die Polysiloxan-Polycarbonat-Blockcopolymere im IT-Bereich für Computergehäuse und Multimediagehäuse, Mobiltelefonschalen sowie im Haushaltsbereich wie in Wasch- oder Spülmaschinen, im Sportbereich z.B. als Material für Helme eingesetzt werden.

### Ausführungsbeispiele

Im Folgenden wird die Erfindung anhand von Ausführungsbeispielen näher beschrieben, ohne dass die Erfindung auf diese Beispiele eingeschränkt werden soll. Dabei kommen die nachfolgend beschriebenen Bestimmungsmethoden für alle korrespondierenden Größen in der vorliegenden Erfindung zur Anwendung, sofern nichts Gegenteiliges beschrieben worden ist.

### Relative Lösungsviskosität

Die relative Lösungsviskosität (ηrel; auch als eta rel bezeichnet) wurde in Dichlormethan bei einer Konzentration von 5 g/l bei 25 °C mit einem Ubbelohdeviskosimeter bestimmt.

### Auswertung der Polysiloxan-Domänengröße und Polysiloxan-Domänengrößenverteilung mittels Rasterkraftmikroskopie (AFM)

Die Polysiloxan-Domänengröße und die Größenverteilung der Polysiloxan-Domänen wurden mittels Rasterkraftmikroskopie ermittelt. Dazu wurde die jeweilige Probe (in Form Granulats bei Extrusionsansätzen) unter Stickstoffkühlung, (-196 °C) mittels eines Ultramikrotoms angeschnitten. Es wurde ein Bruker D3100 AFM-Mikroskop verwendet. Das AFM Bild wurde bei Raumtemperatur aufgenommen (25 °C, 30 % relative Feuchte). Für die Messung wurde der "Soft Intermittent Contact Mode" oder der "Tapping Mode" benutzt. Für das Abrastern der Probe wurde ein "Tapping mode Cantilver" (Nanoworld pointprobe) mit einer Federkonstante von ca. 2,8 Nm⁻¹ und einer Resonanzfrequenz von ca. 75 kHz verwendet. Die Tapping-Kraft wird durch das Verhältnis von Sollwert-Amplitude und freier Schwingungsamplitude (Amplitude der Tastspitze bei freier Schwingung in Luft) kontrolliert. Die Abtastrate wurde auf 1 Hz eingestellt. Zur Aufnahme der Oberflächenmorphologie wurden auf einer 2,5 µm x 2.5 µm Fläche Phasenkontrast- und Topographiebilder aufgenommen. Die Polysiloxan-Domänen wurden automatisch durch eine Bildauswertungsoftware Olympus SIS (Olympus Soft Imaging Solutions GmbH, 48149, Münster, Deutschland) über Hell-Dunkelkontrast aus den Phasenkontrastbildern ausgewertet. Die Durchmesser der Polysiloxan-Domänen wurden über den Durchmesser des entsprechenden flächengleichen Kreises des im Anschnitt sichtbaren Querschnitts der Polysiloxan-Domäne bestimmt.

Von jeder Probe wurden vier (4) Scans über eine Fläche von 5x5 mm² durchgeführt und die Phasenkontrastaufnahmen bildanalytisch wie oben beschrieben ausgewertet. Unter der Annahme kugelförmiger Objekte wurde das Volumen der angeschnittenen Polysiloxan-Domänen berechnet und statistisch ausgewertet. Über die Bildauswertungssoftware wurden die Einzeldurchmesser klassifiziert und eine Verteilung der Durchmesser erstellt. Aus dieser Verteilung wurde sowohl der Volumenanteil der Polysiloxan-Domänen bestimmt, bei denen der Durchmesser kleiner als 100 nm ist, als auch der Volumenanteil der Polysiloxan-Domänen bestimmt, bei denen der Durchmesser kleiner als 200 nm ist, als auch der Volumenanteil der Polysiloxan-Domänen bestimmt, bei denen der Durchmesser größer als 500 nm ist. Die Auflösungsgrenze lag bei 20 nm.

### Ausgangsstoffe:

### Oligocarbonat (Komponente A)

Als Ausgangsstoff für die Herstellung eines Polysiloxan-Polycarbonat-Blockcopolymers wurde lineares Bisphenol-A-Oligocarbonat enthaltend Phenylendgruppen sowie phenolische OH-Endgruppen mit einer relativen Lösungsviskosität von 1,17 eingesetzt. Dieses Oligocarbonat enthielt keine Additive wie UV-Stabilisatoren, Entformungsmittel oder Thermostabilisatoren. Die Herstellung des Oligocarbonats erfolgte über einen Schmelzeumesterungsverfahren wie beispielsweise in WO2019238419A1 beschrieben und wurde direkt am Austritt eines Hochviskosreaktors entnommen. Das Oligocarbonat weist einen Gehalt an phenolischen Endgruppen von 0,16 % auf.

Das Oligocarbonat wurde in einem Umlufttrockner vor Einsatz bei 120 °C für mindestens 2 Stunden getrocknet.

### Hydroxyaryl-terminiertes Polysiloxan enthaltend Kompatibilisator (Komponente B1)

Als Hydroxyaryl-terminiertes Polysiloxan wurde ein Bisphenol-A-terminertes Polydimethylsiloxan der Formel (3) mit n zwischen 25 und 32 und m im Bereich von 2,5 bis 4 (R¹ = H, R² = Methyl; X = Isopropyliden), mit einem Hydroxy-Gehalt zwischen 14 und 20 mg KOH/g und einer Viskosität zwischen 350 und 650 mPas (23 °C); das Polysiloxan ist mit Natriumbenzoat versetzt, der NatriumGehalt beträgt zwischen 0,8 und 1,3 ppm. Auf 9 Teile des Hydroxyaryl-terminierten Polysiloxans wird 1 Teil des Siloxans Dow Corning ^{®} 40-001 (Fa. Dow Corning Corporation) als Kompatibilisator hinzugefügt.

### Hydroxyaryl-terminiertes Polysiloxan ohne Kompatibilisator (Komponente B2)

Als Hydroxyaryl-terminiertes Polysiloxan wurde ein Bisphenol-A-terminertes Polydimethylsiloxan der Formel (3) mit n zwischen 25 und 32 und m im Bereich von 2,5 bis 4 (R¹ = H, R² = Methyl; X = Isopropyliden), mit einem Hydroxy-Gehalt zwischen 14 und 20 mg KOH/g und einer Viskosität zwischen 350 und 650 mPas (23 °C); das Polysiloxan ist mit Natriumbenzoat versetzt, der NatriumGehalt beträgt zwischen 0,8 und 1,3 ppm.

### Versuchsaufbau für Beispiel 7 und Beispiel 8 (erfindungsgemäß)

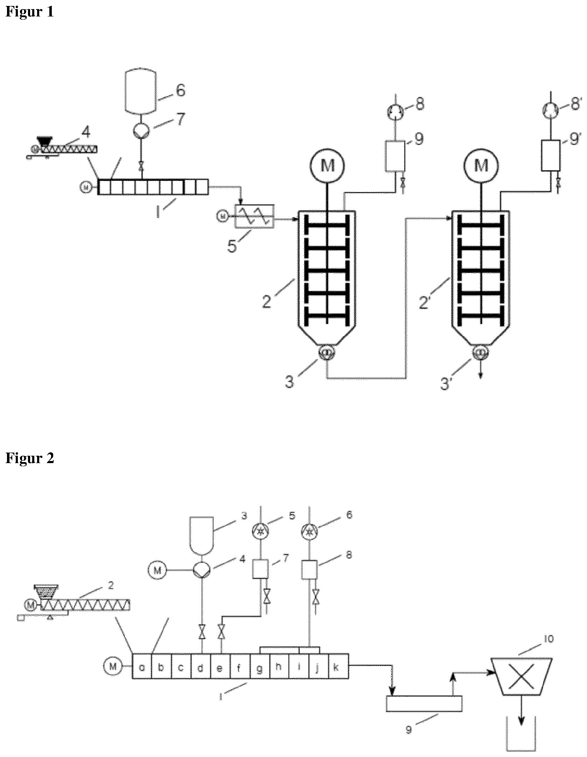

Der Versuchsaufbau zu den Versuchen zu einer der Ausführungsformen des erfindungsgemäßen Verfahrens, Schritte (1) bis (4) des erfindungsgemäßen Verfahrens in der Ausführungsform, in der genau zwei Dünnschichtverdampfer zur Herstellung Polysiloxan-Polycarbonat-Blockcopolymers durch Polykondensation eingesetzt werden, ist in Figur 1 dargestellt. Ein Oligocarbonat (Komponente A) wurde mittels einer gravimetrischen Dosierwaage (4) als Granulat auf einem Plastifizierextruder (1) aufgegeben und aufgeschmolzen. Ein Hydroxyaryl-terminiertes Polysiloxan (Komponente B2) wurde flüssig in einem Vorlagebehälter (6) bereitgestellt und über eine Pumpe (7) kontinuierlich in den Plastifizierextruder (1) dosiert. Die Einspeisung des Hydroxyaryl-terminierten Polysiloxans in den Plastifizierextruder (1) erfolgte in die Schmelze des Oligocarbonats, das heißt stromabwärts von der Plastifizierzone des Extruders (1). Auf dem Plastifizierextruder erfolgte eine Vorvermischung der Komponenten A und B. Das Gemisch wurde auf einen dynamischen Mischer (5) der Firma INDAG vom Typ DLS/M 007 geführt. Der Mischer wurde bei 500 U/min betrieben. Danach wurde das erhaltene Reaktionsgemisch auf einen ersten Dünnschichtverdampfer (2) geführt. Der erste Dünnschichtverdampfer (2) wurde mittels einer Vakuumpumpe (9) evakuiert. Das Abgas wurde über einen Kondensator (8) geführt, wo die kondensierbaren Bestandteile, insbesondere Phenol, abgeschieden wurden. Nach Austrag aus dem ersten Dünnschichtverdampfer (2) wurde das erhaltene Reaktionsgemisch enthaltend ein intermediäres Polysiloxan-Polycarbonat-Blockcopolymer und nicht abreagiertes Oligocarbonat und nicht abreagiertes Hydroxyaryl-terminiertes Polysiloxan mittels einer Zahnradpumpe (3) über eine Schmelzeleitung auf einen zweiten Dünnschichtverdampfer (2') geführt. Nach dem zweiten Dünnschichtverdampfer (2') wurde das erhaltene Polysiloxan-Polycarbonat-Blockcopolymer über eine Zahnradpumpe (3') durch eine Düsenplatte (nicht dargestellt) abgesponnen und granuliert. Auch der zweite Dünnschichtverdampfer (2') wurde über eine Vakuumpumpe (9') evakuiert und kondensierbare Bestandteile des Abgases, insbesondere Phenol, wurden in einem Kondensator (8') abgeschieden.

Die beiden Dünnschichtverdampfer (2) und (2') wiesen jeweils eine Wärmeübertragungsfläche von 0,5 m² auf. Die Wärmeübertragungsflächen der beiden Dünnschichtverdampfer (2) und (2') wurden jeweils von einem vertikalen Rotor mit vier Wischerblattelementen am Umfang überstrichen.

### Versuchsaufbau mit Doppelwellenextruder

### (für die Herstellung des intermediären Polysiloxan-Polycarbonat-Blockcopolymers, das in den Vergleichsbeispielen 1 und 2 sowie in den erfindungsgemäßen Beispielen 5 und 6 Verwendung findet)

Das Schema des Versuchsaufbaus mit einem Doppelwellenextruder ist Figur 2 zu entnehmen.

Figur 2 zeigt ein Schema zur Herstellung eines Polysiloxan-Polycarbonat-Blockcopolymers. Ein Oligocarbonat (Komponente A) wurde über einen gravimetrischen Dosierer (2) auf einen Doppelschneckenextruder (1) dosiert. Der Extruder (Typ ZSE 27 MAXX von Fa. Leistritz Extrusionstechnik GmbH, Nürnberg) war ein gleichsinnig drehender Doppelschneckenextruder (1) mit Vakuumzonen zur Abtrennung der Brüden. Der Doppelschneckenextruder (1) bestand aus 11 Gehäuseteilen (a bis k). Im Gehäuseteil a erfolgte die Zugabe des Oligocarbonats (Komponente A) über die Differentialdosierwaage (2) sowie in den Gehäusen b und c das Aufschmelzen des Oligocarbonats. Die Gehäuseteile d und e dienten außerdem der Einmischung des flüssigen Hydroxyaryl-terminierten Polysiloxans enthaltend einen Kompatibilisator (Komponente B1). Die Gehäuseteile e, g, i und j waren mit Entgasungsöffnungen versehen, um die Kondensationsprodukte, insbesondere Phenol, zu entfernen. Das Gehäuseteil e war der ersten Vakuumstufe und die Gehäuseteile g, i und j der zweiten Vakuumstufe zugeordnet. Der Druck in der ersten Vakuumstufe betrug, wenn nicht anders angegeben, zwischen 45 und 65 mbara. Der Druck in der zweiten Vakuumstufe betrug weniger als 1 mbara. Das Hydroxyaryl-terminierte Polysiloxan enthaltend einen Kompatibilisator (Komponente B1) wurde in einem Tank (3) vorgelegt und über eine Dosierpumpe (4) auf den Doppelschneckenextruder (1) gegeben. Der Unterdruck wurde über die Vakuumpumpen (5) und (6) generiert. Die Brüden wurden vom Doppelschneckenextruder (1) weggeführt und über 2 Kondensatoren (7) und (8) geleitet, wo die Kondensationsprodukte, insbesondere Phenol, niedergeschlagen wurden. Die Schmelze des Polysiloxan-Polycarbonat-Blockcopolymers wurde als Schmelzestrang ausgeformt, in ein Wasserbad (9) geführt und durch den Granulator (10) zerkleinert.

### Versuchsaufbau mit Hochviskosreaktor

### (für Vergleichsbeispiele 3 und 4)

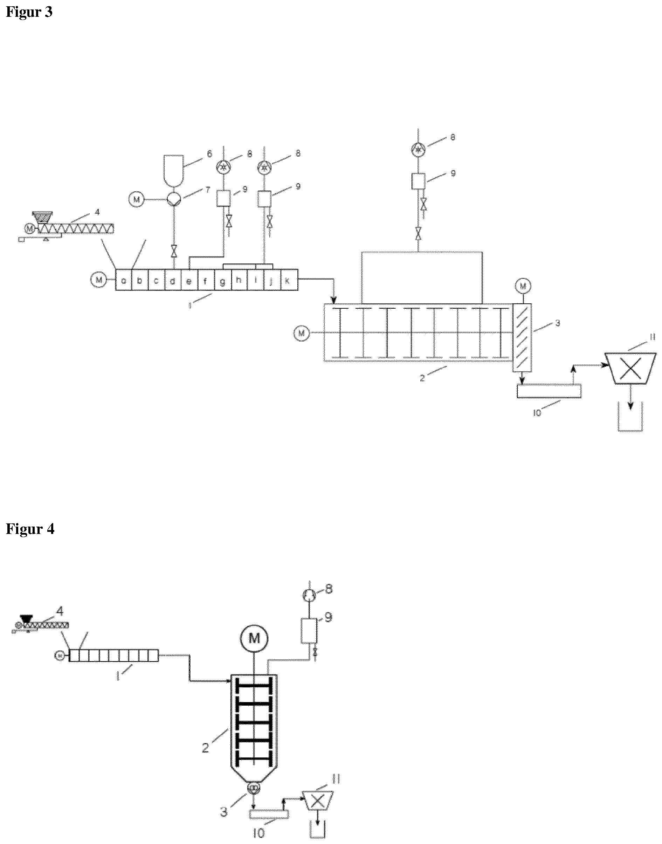

Das Schema des Versuchsaufbaus mit Hochviskosreaktor ist Figur 3 zu entnehmen.

Figur 3 zeigt ein Schema zur Herstellung eines Polysiloxan-Polycarbonat-Blockcopolymers. Ein Oligocarbonat (Komponente A) wurde über eine gravimetrische Zuführung (4) auf einen Doppelschneckenextruder (1) dosiert. Der Doppelschneckenextruder (1) (Typ ZSE 27 MAXX von Fa. Leistritz Extrusionstechnik GmbH, Nürnberg) ist ein gleichsinnig drehender Doppelschneckenextruder mit Vakuumzonen zur Abtrennung der Brüden. Der Doppelschneckenextruder (1) bestand aus 11 Gehäuseteilen (a bis k). Im Gehäuseteil a erfolgte die Zugabe von Oligocarbonat und im Gehäuse b und c das Aufschmelzen dieses Oligocarboanats. Im Gehäuseteil d erfolgte die Zugabe eines flüssigen Hydroxyaryl-terminierten Polysiloxans enthaltend einen Kompatibilisator (Komponente B1). Die Gehäuseteile e und f dienten der Einmischung des flüssigen Hydroxyaryl-terminierten Polysiloxans. Die Gehäuseteile g, h, i und j waren mit Entgasungsöffnungen versehen, um die Kondensationsprodukte zu entfernen. Die Gehäuseteile g und h waren der ersten und die Gehäuseteile i und j der zweiten Vakuumstufe zugeordnet. Der Druck in der ersten Vakuumstufe betrug, soweit nicht anders angegeben, zwischen 250 und 500 mbara. Der Druck in der zweiten Vakuumstufe betrug weniger als 1 mbara. Das Hydroxyaryl-terminierte Polysiloxan wurde in einem Tank (6) vorgelegt und über eine Dosierpumpe (7) auf den Doppelschneckenextruder (1) gegeben. Der Unterdruck wurde über 2 Vakuumpumpen (8) generiert. Die Brüden wurden vom Doppelschneckenextruder (1) weggeführt und in 2 Kondensatoren aufgefangen (9). Die so entgaste und teilweise aufkondensierte Schmelze wurde über eine Leitung vom Gehäuseteil k des Doppelschneckenextruders (1) auf einen Hochviskosreaktor (2) geführt.

Bei dem Hochviskosreaktor (2) handelte es sich um einen selbstreinigenden Apparat mit zwei gegenläufig rotierenden, horizontal und achsparallel angeordneten Rotoren. Der Aufbau ist in der europäischen Patentanmeldung EP0460466A1 beschrieben, siehe dort Fig.7. Der verwendete Hochviskosreaktor (2) hatte einen Gehäusedurchmesser von 187 mm bei einer Länge von 924 mm. Der vom Reaktionsgemisch ausfüllbare Innenraum des Hochviskosreaktors (2) hatte ein Volumen von 44,6 Litern. Der Hochviskosreaktor (2) war ebenfalls an eine Vakuumpumpe (8) und an einen Kondensator (9) angeschlossen. Der am Hochviskosreaktor (2) anliegende Druck betrug 0,1 bis 5 mbara. Nach Abschluss der Reaktion wurde das erhaltene Polysiloxan-Polycarbonat-Blockcopolymer über eine Austragsschnecke (3) abgeführt und anschließend granuliert (über Wasserbad (10) und Granulator (11).

### Vergleichsbeispiel 1: Versuch auf einem Scheibenreaktor

Mit dem Versuchsaufbau nach Figur 2 wurde zunächst ein intermediäres Polysiloxan-Polycarbonat-Blockcopolymer hergestellt. Dazu wurden 9,5 kg/h eines Oligocarbonats (Komponente A) mit einer relativen Lösungsviskosität von 1,17 in das Gehäuse (a) des Doppelschneckenextruders (1) dosiert (siehe Figur 2). Das Hydroxyaryl-terminierte Polysiloxan enthaltend einen Kompatibilisator (Komponente B1) wurde mit 0,475 kg/h in das Gehäuse (d) des Doppelschneckenextruders (1) eingespeist. Der Doppelschneckenextruder (1) wurde mit einer Drehzahl von 400 1/min betrieben. Zwischen den Schneckenkämmen der Schneckenelemente des Doppelschneckenextruders (1) und der Gehäusewand des Doppelschneckenextruders (1) ergab sich dadurch eine Scherrate von 5970 1/s.

Die Extrudergehäuse wurden nach folgendem Schema beheizt: Gehäuse (a) unbeheizt, Gehäuse (b) 170 °C, Gehäuse (c) und (d) 240 °C, Gehäuse (e) 250 °C, Gehäuse (f) 260 °C, Gehäuse (g) und (h) 270 °C, Gehäuse (i) 275 °C, Gehäuse (j) 285 °C und Gehäuse (k) 295 °C. An Gehäuse (e) wurde ein Druck von 40 mbara angelegt. An den Gehäusen (g), (i) und (j) wurde ein Druck von 0,6 mbara angelegt. Das intermediäre Polysiloxan-Polycarbonat-Blockcopolymer wurde mit einer Schmelzetemperatur von 323 °C extrudiert, durch das Wasserbad (10) geführt und granuliert.

10 kg des auf diese Weise hergestellten intermediären Polysiloxan-Polycarbonat-Blockcopolymers wurden in einem Scheibenreaktor der Firma Uhde Inventa Fischer GmbH mit 2 Scheiben von je 800 mm Durchmesser aufgeschmolzen. Die Schmelze wurde bei 300 °C und 1 mbara für 87 Minuten bei einer Rotordrehzahl von 2,5 Umdrehungen pro Minute im Scheibenreaktor polykondensiert. Phenol wurde kontinuierlich entfernt. Das erhaltene Polysiloxan-Polycarbonat-Blockcopolymer wurde ausgetragen und granuliert. Das so erhaltene Polysiloxan-Polycarbonat-Blockcopolymer weist eine relative Lösungsviskosität von eta rel 1,26 auf. Die Scheiben des Reaktors werden mit Abstreifern abgestreift, wobei eine Scherrate von 10 1/s auftritt. Die Scherrate im fallenden Film an den Scheiben ist kleiner 10 1/s.

### Vergleichsbeispiel 2:

10 kg eines wie im Vergleichsbeispiel 1 mittels des Doppelschneckenextruders (1) hergestellten intermediären Polysiloxan-Polycarbonat-Blockcopolymers (Fig. 2) wurden in dem Scheibenreaktor aus Vergleichsbeispiel 1 aufgeschmolzen. Das intermediäre Polysiloxan-Polycarbonat-Blockcopolymer wurde bei 300 °C und 1 mbar für 110 Minuten bei einer Drehzahl von 2,5 Umdrehungen pro Minute im Scheibenreaktor polykondensiert. Die Scheiben des Reaktors werden mit Abstreifern abgestreift, wobei eine Scherrate von 10 1/s auftritt. Die Scherrate im fallenden Film an den Scheiben ist kleiner als 10 1/s. Phenol wurde kontinuierlich entfernt. Das erhaltene Polysiloxan-Polycarbonat-Blockcopolymer wurde ausgetragen und granuliert. Das so erhaltene Polysiloxan-Polycarbonat-Blockcopolymer weist eine relative Lösungsviskosität von eta rel 1,33 auf.

Die Größenverteilung der Polysiloxan-Domänen in den Polysiloxan-Polycarbonat-Blockcopolymeren aus Vergleichsbeispiel 1 und aus Vergleichsbeispiel 2 wurden mittels AFM wie weiter oben beschrieben ermittelt. Dabei ergibt sich, dass sich bei dem Polysiloxan-Polycarbonat-Blockcopolymer aus Vergleichsbeispiel 1 73 Vol.-% des in den AFM-Aufnahmen sichtbaren Polysiloxans in Polysiloxan-Domänen mit einer Größe von größer als 500 nm befinden und nur ein Volumenanteil von 7,9 Vol.-% des Polysiloxans befindet sich in Domänen kleiner 200 nm. Bei dem Polysiloxan-Polycarbonat-Blockcopolymer aus Vergleichsbeispiel 2 befinden sich 34 Vol.-% des in den AFM-Aufnahmen sichtbaren Polysiloxans in Polysiloxan-Domänen mit einer Größe größer als 500 nm und nur 20 Vol.-% des Polysiloxans in Domänen kleiner 200 nm. Erfahrungsgemäß führen insbesondere Polysiloxan-Domänen mit einer Größe von mehr als 500 nm zu starken Oberflächenstörungen in spritzgegossenen Bauteilen. Polysiloxan-Domänen mit einer Größe von mehr als 200 nm können schon zu einer Verschlechterung des das ästhetisches Erscheinungsbilds von spritzgegossenen Bauteilen führen. Die Produkte aus den Vergleichsbeispielen 1 und 2 erfüllen somit die Anforderung an eine feine Polysiloxan-Domänengrößenverteilung nicht.

### Vergleichsbeispiel 3

### Versuch auf Hochviskosreaktor.

Mit dem Versuchsaufbau nach Figur 3 wurden 28,6 kg / h Oligocarbonat (Komponente A) sowie 1,43 kg/h eines Hydroxyaryl-terminierten Polysiloxans enthaltend einen Kompatibilisator (Komponente B1) auf den Doppelschneckenextruder (1) dosiert. Die Drehzahl des Doppelschneckenextruders (1) betrug 850 1/min. Zwischen den Schneckenkämmen der Schneckenelemente des Doppelschneckenextruders (1) und der Gehäusewand des Doppelschneckenextruders (1) ergab sich dadurch eine Scherrate von 12700 1/s. Die Extrudergehäuse wurden nach folgendem Schema beheizt: Gehäuse (a) unbeheizt, Gehäuse (b) 170 °C, Gehäuse (c) und (d) 240 °C, Gehäuse (e) 250 °C, Gehäuse (f) 260 °C, Gehäuse (g) und (h) 270 °C, Gehäuse (i) 275 °C, Gehäuse (j) 285 °C und Gehäuse (k) 295 °C. Am Gehäuse (e) lag ein Druck von 140 mbara und an den Gehäusen (g), (i) und (j) lag jeweils ein Druck von 0,8 mbara an. Die Austrittstemperatur aus dem Doppelschneckenextruder (1) betrug 308 °C. Die extrudierte Polymerschmelze wurde über eine Rohrleitung auf den Hochviskosreaktor (2) überführt. Die Drehzahl des Hochviskosreaktors betrug 30 1/min. Daraus resultiert eine Scherrate zwischen den Rotoren des Hochviskosreaktors (2) und der Gehäuseinnenwand des Hochviskosreaktors (2) von 114 1/s. Die Gehäusetemperatur des Hochviskosreaktors (2) betrug 330 °C. Der Druck im Innenraum des Hochviskosreaktors (2) Druck betrug 0,5 mbara. Es wurde ein farbhelles Polysiloxan-Polycarbonat-Blockcopolymer mit einer relativen Lösungsviskosität von 1,376 erhalten.

### Vergleichsbeispiel 4

### Versuch auf Hochviskosreaktor

Mit dem Versuchsaufbau nach Figur 3 wurden 23,8 kg / h Oligocarbonat (Komponente A) sowie 1,19 kg/h Hydroxyaryl-terminiertes Polysiloxan enthaltend einen Kompatibilisator (Komponente B1) auf den Doppelschneckenextruder (1) dosiert. Die Drehzahl des Extruders betrug 700 1/min. Zwischen den Schneckenkämmen der Schneckenelemente des Doppelschneckenextruders (1) und der Gehäusewand des Doppelschneckenextruders (1) ergab sich dadurch eine Scherrate von 10450 1/s. Die Extrudergehäuse des Doppelschneckenextruders (1) wurden nach folgendem Schema beheizt: Gehäuse (a) unbeheizt, Gehäuse (b) 170 °C, Gehäuse (c) und (d) 240 °C, Gehäuse (e) 250 °C, Gehäuse (f) 260 °C, Gehäuse (g) und (h) 270 °C, Gehäuse (i) 275 °C, Gehäuse (j) 285 °C und Gehäuse (k) 295 °C. Am Gehäuse (e) und an den Gehäusen (g), (i) und (j) lag jeweils Normaldruck an. Die Schmelze wurde auf den Hochviskosreaktor (2) überführt. Die Drehzahl betrug 45 1/min. Daraus resultiert eine Scherrate zwischen den Rotoren des Hochviskosreaktors (2) und der Gehäuseinnenwand des Hochviskosreaktors (2) von 172 1/s. Die Gehäusetemperatur des Hochviskosreaktors (2) betrug 310 °C. Der am Gehäuse des Hochviskosreaktors (2) angelegte Druck betrug 1,6 mbara. Es wurde ein farbhelles Polysiloxan-Polycarbonat-Blockcopolymer mit einer relativen Lösungsviskosität von 1,31 erhalten.

### Polysiloxan-Domänengrößenverteilung mittels AFM von Vergleichsbeispiel 3 und 4

Die Größe der Polysiloxan-Domänen der Produkte aus den Vergleichsbeispielen 3 und 4 wurde mit derselben Methode bestimmt, die auch bei den Vergleichsbeispielen 1 und 2 zur Anwendung kam. Diese Produkte enthalten keine Polysiloxan-Domänen, die größer sind als 500 nm. Für das Produkt aus Vergleichsbeispiel 3 ergibt sich, dass 89,2 Vol.-% des eingesetzten Polysiloxans in Domänen kleiner 100 nm vorliegen und 100 Vol.-% des eingesetzten Polysiloxans in Domänen kleiner 200 nm vorliegen. Das Produkt aus Vergleichsbeispiel 3 weist damit zwar eine feine Polysiloxan-Domänengrößenverteilung auf, jedoch konnte diese Verteilung nur in Kombination mit einer sehr hohen relativen Lösungsviskosität erreicht werden, die außerhalb des gewünschten Bereichs liegt. Ein Material mit einer derart hohen relativen Lösungsviskosität lässt sich nur noch unter besonderem Aufwand im Spritzgussprozess verarbeiten. Vergleichsbeispiel 4 zeigt, dass es grundsätzlich möglich ist, das Herstellverfahren so anzupassen, dass die relative Lösungsviskosität im gewünschten Bereich liegt. Allerdings wird dabei keine feine Polysiloxan-Domänengrößenverteilung mehr erhalten. Beim Produkt aus Vergleichsbeispiel 4 liegen 74,8 Vol.-% des eingesetzten Polysiloxans in Domänen größer als 100 nm vor und 38,4 Vol.-% des eingesetzten Polysiloxans liegen in Domänen größer als 200 nm vor.

### Beispiel 5

### (erfindungsgemäß; mit genau einem Dünnschichtverdampfer gemäß Figur 4)

In dem Versuchsaufbau nach Figur 2 wurden zunächst 21 kg/h eines Oligocarbonats (Komponente A) mit einer relativen Viskosität von 1,17 in das Gehäuse (a) des Doppelschneckenextruders (1) dosiert und das Hydroxyaryl-terminierte Polysiloxan enthaltend einen Kompatibilisator (Komponente B1) wurde mit 1,05 kg in das Gehäuse (d) des Doppelschneckenextruders (1) eingespeist. Der Doppelschneckenextruder (1) wurde mit einer Drehzahl von 500 1/min betrieben. Zwischen den Schneckenkämmen der Schneckenelemente des Doppelschneckenextruders (1) und der Gehäusewand des Doppelschneckenextruders (1) ergab sich dadurch eine Scherrate von 7560 1/s. Die Extrudergehäuse des Doppelschneckenextruders (1) wurde nach folgendem Schema beheizt: Gehäuse (a) unbeheizt, Gehäuse (b) 170 °C, Gehäuse (c) und (d) 240 °C, Gehäuse (e) 250 °C, Gehäuse (f) bis (k) 260 °C. Es wird kein Unterdruck angelegt. Da durch den fehlenden Unterdruck möglicherweise entstehende Reaktionsprodukte wie beispielsweise Phenol nicht oder nur in sehr geringem Maße abgeführt wurden, entstand im Wesentlichen eine physikalische Mischung (Blend) aus einem Oligocarbonat und einem Polysiloxan ohne reaktive Anbindung.

Das auf diese Weise hergestellte Blend aus einem Oligocarbonat und einem Polysiloxan wird auf einem Plastifizierextruder (1) aufgeschmolzen und mittels einer Zahnradpumpe (nicht gezeigt) auf einen Dünnschichtverdampfer (2) nach Figur 4 gefördert. Das Blend wird mit einer Schmelzetemperatur von ca. 265 °C und einem Durchsatz von 20 kg/h in den Dünnschichtverdampfer (2) eingespeist und bei einer Gehäusetemperatur 334 °C kondensiert. Der Druck im Dünnschichtverdampfer (2) betrug 0,4 mbara. Die Scherrate zwischen den Außenkanten der Wischerblattelemente und der Innenfläche der Reaktionskammer des Dünnschichtverdampfers (2) betrug 3930 1/s. Man erhielt ein farbhelles Granulat mit einer relativen Lösungsviskosität von 1,30.

Der Dünnschichtverdampfer (2) wies eine Wärmeübertragungsfläche von 0,5 m² auf. Die Wärmeübertragungsfläche des Dünnschichtverdampfers (2) wurde von einem vertikalen Rotor mit vier Wischerblattelementen am Umfang mit einer Drehzahl von 500 1/min überstrichen; daraus ergibt sich eine Frequenz der Oberflächenerneuerung von 33,3 Hz.

### Beispiel 6

### (erfindungsgemäß; mit genau einem Dünnschichtverdampfer gemäß Figur 4)

Genau wie in Beispiel 5 beschrieben wird zunächst ein Blend aus einem Oligocarbonat (Komponente A) und einem Hydroxyaryl-terminierten Polxsiloxan enthaltend einen Kompatibilisator (Komponente B1) hergestellt. Dieses wird auf einem Plastifizierextruder (1) aufgeschmolzen und mittels Zahnradpumpe (nicht gezeigt) auf einen Dünnschichtverdampfer (2) nach Figur 4 gefördert. Das Blend wird mit einer Schmelzetemperatur von ca. 265 °C und bei einem Durchsatz von 18 kg/h in den Dünnschichtverdampfer (2) gespeist und bei einer Gehäusetemperatur 334 °C kondensiert. Der Druck im Dünnschichtverdampfer (2) betrug 0,4 mbar. Die Scherrate zwischen den Außenkanten der Wischerblattelemente und der Innenfläche der Reaktionskammer des Dünnschichtverdampfers (2) betrug 3530 1/s. Der Dünnschichtverdampfer (2) wies eine Wärmeübertragungsfläche von 0,5 m² auf. Die Wärmeübertragungsfläche des Dünnschichtverdampfers (2) wurde von einem vertikalen Rotor mit vier Wischerblattelementen am Umfang mit einer Drehzahl von 450 1/min überstrichen; daraus ergibt sich eine Frequenz der Oberflächenerneuerung von 30 Hz.

Man erhielt ein farbhelles Granulat mit einer relativen Lösungsviskosität von 1,285.

### Beispiel 7 - erfindungsgemäß mit genau zwei Dünnschichtverdampfern gemäß Figur 1

36,9 kg/h Oligocarbonat (Komponente A) wurden auf einem Plastifizierextruder (1) plastifiziert und 2 kg/h Hydroxyaryl-terminiertes Polysiloxan ohne Kompatibilisator (Komponente B2) wurden auf dem Plastifizierextruder (1) in die Schmelze eingemischt zur Herstellung einer Vormischung. Zur weiteren Homogenisierung wurde die Vormischung aus Oligocarbonat und Hydroxyaryl-terminierten ohne Kompatibilisator Polysiloxan über einen dynamischen Mischer (5) vom Typ DLM/S 007 der Fa. INDAG Maschinenbau geleitet, der mit einer Drehzahl von 500 1/min betrieben wurde. Die Vormischung trat anschließend mit einer Temperatur von 284 °C in einen ersten Dünnschichtverdampfer (2) mit einer Wärmeübertragungsfläche von 0,5 m² ein, der mit einer Scherrate von 3110 1/s zwischen den Außenkanten der Wischerblattelemente und der Innenfläche der Reaktionskammer, einer Gehäusetemperatur von 310 °C in seiner oberen Hälfte und von 300 °C in seiner unteren Hälfte, sowie einem Druck von 1 mbara betrieben wurde. Die erhaltene Schmelze wurde ausgetragen und mittels einer Zahnradpumpe (3) auf den zweiten Dünnschichtverdampfer (2') mit einer Wärmeübertragungsfläche von 0,5 m² gefördert.

Der zweite Dünnschichtverdampfer (2') wurde mit einer Scherrate von 860 1/s zwischen den Außenkanten der Wischerblattelemente und der Innenfläche der Reaktionskammer und mit einem Druck von 1 mbara betrieben. Die obere Hälfte der Reaktionskammer des Dünnschichtverdampfers (2') wurde mit 320 °C beheizt und die untere mit 317 °C. Die Schmelze wurde dadurch weiter aufkondensiert und wurde mit 361 °C durch die Zahnradpumpe (3') ausgetragen. Die Wärmeübertragungsfläche des Dünnschichtverdampfers (2) wurde von einem vertikalen Rotor mit vier Wischerblattelementen am Umfang mit einer Drehzahl von 330 1/min überstrichen; daraus ergibt sich eine Frequenz der Oberflächenerneuerung von 22 Hz. Die Wärmeübertragungsfläche des Dünnschichtverdampfers (2') wurde von einem vertikalen Rotor mit vier Wischerblattelementen am Umfang mit einer Drehzahl von 220 1/min überstrichen; daraus ergibt sich eine Frequenz der Oberflächenerneuerung von 14,7 Hz.

Man erhielt ein helles Polysiloxan-Polycarbonat-Blockcopolymer mit einer relativen Lösungsviskosität von 1,324.

### Beispiel 8

### (erfindungsgemäß mit genau zwei Dünnschichtverdampfern gemäß Figur 1)

41 kg/h Oligocarbonat (Komponente A) wurden auf einem Plastifizierextruder (1) plastifiziert und 2.32 kg/h Hydroxyaryl-terminiertes Polysiloxan ohne Kompatibilisator (Komponente B2) mit einer OH-Zahl von 19.2 mg KOH/g wurden auf dem Plastifizierextruder (1) in die Schmelze eingemischt zur Herstellung einer Vormischung. Zur weiteren Homogenisierung wurde die Vormischung aus Oligocarbonat und Hydroxyaryl-terminierten Polysiloxan ohne Kompatibilisator über einen dynamischen Mischer (5) vom Typ DLM/S 007 der Fa. INDAG Maschinenbau geleitet, der mit einer Drehzahl von 500 1/min betrieben wurde. Die Vormischung trat anschließend mit einer Temperatur von 275 °C in einen ersten Dünnschichtverdampfer (2) mit einer Wärmeübertragungsfläche von 0,5 m² ein, der mit einer Scherrate von 710 1/s zwischen den Außenkanten der Wischerblattelemente und der Innenfläche der Reaktionskammer, einer Gehäusetemperatur von einheitlich 290 °C, sowie einem Druck von 1 mbara betrieben wurde. Die erhaltene Schmelze wurde ausgetragen und mittels einer Zahnradpumpe (3) auf den zweiten Dünnschichtverdampfer (2') mit einer Wärmeübertragungsfläche von 0,5 m² gefördert.

Der zweite Dünnschichtverdampfer (2') wurde mit einer Schergeschwindigkeit von 635 1/s zwischen den Außenkanten der Wischerelementen und der Innenfläche der Reaktionskammer und mit einem Druck von 1 mbara betrieben. Die obere Hälfte des Dünnschichtverdampfers (2') wurde einheitlich mit 310 °C beheizt. Die Schmelze wurde dadurch weiter aufkondensiert und wurde mit 329 °C durch die Zahnradpumpe (3') ausgetragen. Die Wärmeübertragungsfläche des Dünnschichtverdampfers (2) wurde von einem vertikalen Rotor mit vier Wischerblattelementen am Umfang mit einer Drehzahl von 189 1/min überstrichen; daraus ergibt sich eine Frequenz der Oberflächenerneuerung von 12,6 Hz. Die Wärmeübertragungsfläche des Dünnschichtverdampfers (2') wurde von einem vertikalen Rotor mit vier Wischerblattelementen am Umfang mit einer Drehzahl von 202 1/min überstrichen; daraus ergibt sich eine Frequenz der Oberflächenerneuerung von 13,5 Hz.

Man erhielt ein helles Polysiloxan-Polycarbonat-Blockcopolymer mit einer relativen Lösungsviskosität von 1,315.

Vergleichsbeispiel 1 zeigt, dass sich mit einem Verfahren unter Verwendung eines Scheibenreaktors Polysiloxan-Polycarbonat-Blockcopolymere herstellen lassen. Die relative Lösungsviskosität des Materials aus Vergleichsbeispiel 1 liegt mit eta rel 1,26 in einem Bereich, der eine zufriedenstellende Fließfähigkeit aufweist. Allerdings weist das Polysiloxan-Polycarbonat-Blockcopolymer Polysiloxan-Domänen mit Durchmessern oberhalb von 500 nm auf. Der Volumenanteil von Polysiloxan-Domänen mit Durchmessern größer 500 nm ist mit 73 Vol.-% sehr hoch. Ein aus einem Polysiloxan-Polycarbonat-Blockcopolymer mit dieser Größenverteilung der Polysiloxan-Domänen hergestellter Spritzgusskörper ist für viele handelsübliche Verwendungen nicht zu gebrauchen.

Mit Vergleichsbeispiel 2 konnte gezeigt werden, dass sich die Polysiloxan-Domänenverteilung durch längere Verweilzeiten feiner machen lässt. So sinkt der Volumenanteil von Polysiloxan-Domänen mit Durchmessern größer 500 nm deutlich. Allerdings steigt auch die relative Lösungsviskosität signifikant, so dass das Polysiloxan-Polycarbonat-Blockcopolymer keine akzeptable Fließfähigkeit mehr aufweist.

Da normalerweise die Größenverteilung der Polysiloxan-Domänen mit zunehmender relativer Lösungsviskosität feiner wird, ist es überraschend, dass trotz der deutlich verschlechterten Fließfähigkeit mit einer relativen Lösungsviskosität von 1,33 immer noch mehr als ein Drittel des Volumens des Polysiloxans in Domänen mit Durchmessern von mehr als 500 nm zu finden ist. Somit ist auch ein aus diesem Polysiloxan-Polycarbonat-Blockcopolymer hergestellter Spritzgusskörper ist für viele handelsübliche Verwendungen nicht zu gebrauchen.

Ein Verfahren unter Verwendung eines Scheibenreaktors löst damit nicht die der vorliegenden Erfindung zu Grunde liegende Aufgabe.

Vergleichsbeispiele 3 und 4 wurden unter Verwendung eines Hochviskosreaktors durchgeführt. Vergleichsbeispiel 3 zeigt, dass sich auch mit einem Hochviskosreaktors feine Polysiloxan-Domänengrößenverteilungen erreichen lassen. Allerdings ist die Viskosität mit einer relativen Lösungsviskosität von 1,376 hoch und die Fließfähigkeit damit unbefriedigend. Vergleichsbeispiel 4 weist demgegenüber zwar eine brauchbare Fließfähigkeit auf, jedoch ist die Größenverteilung der Polysiloxan-Domänen schlecht.

Damit löst auch ein Verfahren unter Verwendung eines Hochviskosreaktors nicht die der vorliegenden Erfindung zu Grunde liegende Aufgabe.

Die erfindungsgemäßen Beispiele 5 und 6 zeigen, dass sich mit einem Verfahren unter Verwendung genau eines Dünnschichtverdampfers unter Anwendung von hohen Scherraten, niedrigen Drücken, häufiger Oberflächenerneuerung bei moderaten Temperaturen ein Polysiloxan-Polycarbonat-Blockcopolymer herstellen lässt, das sowohl eine feine Polysiloxan-Domänengrößenverteilung als auch eine für die Verarbeitung im Spritzguss brauchbare Fließfähigkeit aufweist. Das dargestellte Verfahren zur Herstellung eines Polysiloxan-Polycarbonat-Blockcopolymers unter Verwendung genau eines Dünnschichtverdampfers löst somit die der vorliegenden Erfindung zu Grunde liegende Aufgabe.

Die erfindungsgemäßen Beispiel 7 und 8 zeigen, dass sich mit einem Verfahren unter Verwendung einer Kaskade von zwei Dünnschichtverdampfern unter Anwendung von hohen Scherraten, niedrigen Drücken, häufiger Oberflächenerneuerung bei moderaten Temperaturen ein Polysiloxan-Polycarbonat-Blockcopolymer herstellen lässt, das sowohl eine feine Polysiloxan-Domänengrößenverteilung als auch eine für die Verarbeitung im Spritzguss brauchbare Fließfähigkeit aufweist. Das dargestellte Verfahren zur Herstellung eines Polysiloxan-Polycarbonat-Blockcopolymers unter Verwendung zweier Dünnschichtverdampfer löst somit die der vorliegenden Erfindung zu Grunde liegende Aufgabe. Besonders vorteilhaft ist diese Ausgestaltung des erfindungsgemäßen Verfahrens deshalb, weil die Aufgabe ohne Zugabe eines Kompatibilisators gelöst wurde.

Der leichteren Übersicht halber sind die in den einzelnen Versuchen erhaltenen Werte für die Volumenanteile der Polysiloxan-Domänen für verschiedene Durchmesser der zugehörigen Polysiloxan-Domänen sowie die zugehörigen relativen Lösungsviskositäten in Tabelle 1 wiedergegeben.

**Tabelle 1**

| **Nr.** | | **Vol.-Anteil Teilchen < 100 nm [Vol.-%]** | **Vol.-Anteil Teilchen < 200 nm [Vol.-%]** | **Vol.-Anteil Teilchen > 500 nm [Vol.-%]** | **Relative Lösungsviskosität (eta rel).** |
|---|---|---|---|---|---|
| 1 | Vergleichsbeispiel. | 3,3 | 7,9 | 73,1 | 1,26 |
| 2 | Vergleichsbeispiel. | 11,4 | 20,1 | 33,6 | 1,33 |
| 3 | Vergleichsbeispiel. | 89,2 | 100 | 0 | 1,376 |
| 4 | Vergleichsbeispiel. | 25,2 | 61,6 | 0 | 1,31 |
| 5 | erfindungsgemäß | 74,3 | 100 | 0 | 1,30 |
| 6 | erfindungsgemäß | 57,5 | 91,7 | 0 | 1,285 |
| 7 | erfindungsgemäß | 77,0 | 100 | 0 | 1,324 |
| 8 | erfindungsgemäß | 70,2% | 100 | 0 | 1,315 |

## Patentansprüche

1. Verfahren zur kontinuierlichen Herstellung eines Polysiloxan-Polycarbonat-Blockcopolymers unter Verwendung genau eines Dünnschichtverdampfers,
wobei das Verfahren durch folgende Verfahrensschritte gekennzeichnet ist:
(1) Bereitstellen eines Reaktionsgemischs enthaltend ein Oligocarbonat mit einer relativen Lösungsviskosität von 1,08 bis 1,22 und mit einem OH-Gruppengehalt von 1000 bis 2500 ppm und enthaltend ein Hydroxyaryl-terminertes Polysiloxan,
(2) Eintragen des in Schritt (1) bereitgestellten Reaktionsgemischs enthaltend ein Oligocarbonat und ein Hydroxyaryl-terminiertes Polysiloxan in den genau einen Dünnschichtverdampfer, wobei der Dünnschichtverdampfer genau eine Reaktionskammer mit genau einem Rotor mit mindestens zwei Wischerblattelementen am Umfang aufweist, wobei der genau eine Rotor in dem Dünnschichtverdampfer rotiert, und wobei ein Wischerblattelement je eine Außenkante aufweist,
(3) Umsetzung des Reaktionsgemischs aus Schritt (2) zu einem Polysiloxan-Polycarbonat-Blockcopolymer, wobei das Reaktionsgemisch vom Eintrag des Dünnschichtverdampfers bis zum Austrag des Dünnschichtverdampfers gefördert wird,
(4) Austrag des in Schritt (3) erhaltenen Polysiloxan-Polycarbonat-Blockcopolymers aus dem Dünnschichtverdampfer,
wobei in Schritt (3) in dem genau einem Dünnschichtverdampfer folgende Verfahrensbedingungen eingehalten werden:
(3.a) Scherrate zwischen der Außenkante der mindestens zwei rotierenden Wischerblattelemente am Umfang und der sich in axialer Richtung erstreckenden rotationssymmetrischen Innenfläche der Reaktionskammer des Dünnschichtverdampfers von 500 1/s bis 5000 1/s,
(3.b) Druck in der Reaktionskammer des Dünnschichtverdampfers von 0,01 mbara bis 10 mbara,
(3.c) Temperatur des Reaktionsgemischs in der Reaktionskammer von 280 °C bis 370 °C,
(3.d) Frequenz der Oberflächenerneuerung des Reaktionsgemischs von 10 bis 50 Hz.

2. Verfahren zur kontinuierlichen Herstellung eines Polysiloxan-Polycarbonat-Blockcopolymers unter Verwendung einer Anzahl von in Reihe geschalteter Dünnschichtverdampfer, wobei diese Anzahl mindestens zwei beträgt,
wobei das Verfahren durch folgende Verfahrensschritte gekennzeichnet ist:
(1) Bereitstellen eines Reaktionsgemischs enthaltend ein Oligocarbonat mit einer relativen Lösungsviskosität von 1,08 bis 1,22 und mit einem OH-Gruppengehalt von 1000 bis 2500 ppm und enthaltend ein Hydroxyaryl-terminiertes Polysiloxan,
(2) Eintragen des in Schritt (1) bereitgestellten Reaktionsgemischs enthaltend ein Oligocarbonat und ein Hydroxyaryl-terminiertes Polysiloxan in den ersten der mindesten zwei in Reihe geschalteter Dünnschichtverdampfer,
wobei jeder der mindestens zwei Dünnschichtverdampfer genau je eine Reaktionskammer mit genau je einem Rotor mit jeweils mindestens zwei Wischerblattelementen am Umfang aufweist, wobei der genau je eine Rotor in dem jeweiligen Dünnschichtverdampfer rotiert, und wobei ein Wischerblattelement je eine Außenkante aufweist,
(3) Umsetzung des Reaktionsgemischs aus Schritt (2) zu einem Polysiloxan-Polycarbonat-Blockcopolymer,
wobei das Reaktionsgemisch vom Eintrag des ersten Dünnschichtverdampfer der mindestens zwei in Reihe geschalteten Dünnschichtverdampfer bis zum Austrag des letzten Dünnschichtverdampfers der mindestens zwei in Reihe geschalteten Dünnschichtverdampfer gefördert wird,
(4) Austrag des in Schritt (3) erhaltenen Polysiloxan-Polycarbonat-Blockcopolymers aus dem
letzten Dünnschichtverdampfer,
wobei in Schritt (3) in dem letzten der mindestens zwei in Reihe geschalteten Dünnschichtverdampfer folgende Verfahrensbedingungen eingehalten werden:
(3.a) Scherrate zwischen der Außenkante der mindestens zwei rotierenden Wischerblattelemente am Umfang und der sich in axialer Richtung erstreckenden rotationssymmetrischen Innenfläche der Reaktionskammer des Dünnschichtverdampfers von 500 1/s bis 5000 1/s,
(3.b) Druck in der Reaktionskammer des Dünnschichtverdampfers von 0,01 mbara bis 10 mbara,
(3.c) Temperatur des Reaktionsgemischs in der Reaktionskammer von 280°C bis 370°C,
(3.d) Frequenz der Oberflächenerneuerung des Reaktionsgemischs von 10 bis 50 Hz.

3. Verfahren nach Anspruch 1 oder Anspruch 2, wobei in Verfahrensschritt (3) in dem einzigen Dünnschichtverdampfer oder in dem letzten Dünnschichtverdampfer einer Anzahl in Reihe geschalteter Dünnschichtverdampfers folgende Verfahrensbedingung eingehalten wird:
(3.a.a) dass die Scherrate zwischen der rotierenden Außenkante eines Wischerblattelements und der sich axial erstreckenden rotationssymmetrischen Innenfläche der Reaktionskammer des Dünnschichtverdampfer von 500 1/s bis 4000 1/s beträgt.

4. Verfahren nach Anspruch 1 oder Anspruch 2, wobei in Verfahrensschritt (3) in dem einzigen Dünnschichtverdampfer oder in dem letzten Dünnschichtverdampfer einer Anzahl von in Reihe geschalteter Dünnschichtverdampfer folgende Verfahrensbedingung eingehalten wird: (3.b.a) dass der Druck in der Reaktionskammer des Dünnschichtverdampfers von 0,1 mbara bis 6 mbara, bevorzugt von 0,2 mbara bis 2 mbara beträgt.

5. Verfahren nach Anspruch 1 oder Anspruch 2, wobei die relative Lösungsviskosität des Oligocarbonats, das in Schritt (1) bereitgestellt wird, von 1,11 bis 1,22, besonders bevorzugt 1,13 bis 1,20, beträgt.

6. Verfahren nach Anspruch 1 oder Anspruch 2, wobei der Polysiloxangehalt des Polysiloxan-Polycarbonat-Blockcopolymers von 2 bis 15 Gew.-% beträgt, wobei der Polysiloxangehalt bezogen ist auf das Gesamtgewicht des Polysiloxan-Polycarbonat-Blockcopolymer.

7. Verfahren nach Anspruch 6, wobei der Polysiloxangehalt des Polysiloxan-Polycarbonat-Blockcopolymers von 3 bis 10 Gew.-% beträgt, wobei der Polysiloxangehalt bezogen ist auf das Gesamtgewicht des Polysiloxan-Polycarbonat-Blockcopolymers.

8. Verfahren nach Anspruch 7, wobei der Polysiloxangehalt des Polysiloxan-Polycarbonat-Blockcopolymers von 4 bis 8 Gew.-% beträgt, wobei der Polysiloxangehalt bezogen ist auf das Gesamtgewicht des Polysiloxan-Polycarbonat-Blockcopolymers.

9. Verfahren nach Anspruch 7, wobei der Polysiloxangehalt des Polysiloxan-Polycarbonat-Blockcopolymers von 4,5 bis 5,5 Gew.-% beträgt, wobei der Polysiloxangehalt bezogen ist auf das Gesamtgewicht des Polysiloxan-Polycarbonat-Blockcopolymers.

10. Verfahren nach Anspruch 1 oder Anspruch 2, wobei der OH-Gruppengehalt des Oligocarbonats, das in Schritt (1) bereitgestellt wird, von 1200 bis 2300 ppm, besonders bevorzugt von 1400 bis 2200 ppm beträgt.

11. Verfahren nach Anspruch 1 oder Anspruch 2, wobei in Schritt (1) das Reaktionsgemisch enthaltend ein Oligocarbonat mit einer relativen Lösungsviskosität von 1,08 bis 1,22, bevorzugt mit einer relativen Lösungsviskosität von 1,11 bis 1,22, besonders bevorzugt mit einer relativen Lösungsviskosität von 1,13 bis 1,20, und mit einem OH-Gruppengehalt von 1000 bis 2500 ppm, bevorzugt mit einem OH-Gruppengehalt von 1200 bis 2300 ppm, besonders bevorzugt mit einem OH-Gruppengehalt von 1400 bis 2200 ppm, und enthaltend ein Hydroxyaryl-terminertes Polysiloxan unter Einsatz von dynamischen und/oder statischen Mischern hergestellt wird.

12. Verfahren nach Anspruch 2, wobei in Schritt (3) des Verfahrens bevorzugt folgende Verfahrensbedingungen eingehalten:
im ersten Dünnschichtverdampfer:
(3.1.a) Scherrate zwischen der Außenkante eines rotierenden Wischerblattelements und der sich in axialer Richtung erstreckenden rotationssymmetrischen Innenfläche der Reaktionskammer des Dünnschichtverdampfers von 500 1/s bis 5000 1/s,
(3.1.b) Druck in der Reaktionskammer von 1 mbara bis 10 mbara,
(3.1.c) Temperatur des Reaktionsgemischs in der Reaktionskammer von 270 °C bis 350 °C,
(3.1.d) Frequenz der Oberflächenerneuerung des Reaktionsgemischs von 10 bis 30 Hz,
und im letzten Dünnschichtverdampfer:
(3.2.a) Scherrate der Außenkante der mindestens zwei rotierenden Wischerblattelemente und der sich in axialer Richtung erstreckenden rotationssymmetrischen Innenfläche der Reaktionskammer des Dünnschichtverdampfers von 500 1/s bis 4000 1/s, bevorzugt von 500 1/s bis 2000 1/s,
(3.2.b) Druck in der Reaktionskammer von 0,1 mbara bis 3 mbara, bevorzugt 0,2 bis 2 mbara,
(3.2.c) Temperatur des Reaktionsgemischs in der Reaktionskammer von 280 °C bis 370 °C,
(3.2.d) Frequenz der Oberflächenerneuerung des Reaktionsgemischs von 10 bis 30 Hz.

13. Polysiloxan-Polycarbonat-Blockcopolymer, aufweisend folgende Merkmale:
- Polysiloxangehalt von 2 bis 15 Gew.-%, bezogen auf das Gesamtgewicht des Polysiloxan-Polycarbonat-Blockcopolymers,
- Volumenanteil an Polysiloxan-Domänen im Polysiloxan-Polycarbonat-Blockcopolymer - gemessen am Gesamtvolumen der Polysiloxan-Domänen - , bei denen Durchmesser 100 nm überschreitet, geringer als 70 %, wobei gleichzeitig der Volumenanteil an Polysiloxan-Domänen, bei denen der Durchmesser 200 nm überschreitet, geringer als 30 % ist, wobei gleichzeitig der Volumenanteil an Polysiloxan-Domänen, bei denen der Durchmesser eine Länge von 500 nm überschreitet, geringer als 0,1 % ist, wobei die relative Lösungsviskosität von 1,38 bis 1,24, bevorzugt von 1,36 bis 1,26, besonders bevorzugt von 1,35 bis 1,27, beträgt;

14. Polysiloxan-Polycarbonat-Blockcopolymer nach Anspruch 13, aufweisend folgende Merkmale
- Polysiloxangehalt von 4,5 bis 5,5 Gew.-%, bezogen auf das Gesamtgewicht des Polysiloxan-Polycarbonat-Blockcopolymers,
- Volumenanteil an Polysiloxan-Domänen im Polysiloxan-Polycarbonat-Blockcopolymer - gemessen am Gesamtvolumen der Polysiloxan-Domänen - , bei denen Durchmesser 100 nm überschreitet, geringer als 70 %, wobei gleichzeitig der Volumenanteil an Polysiloxan-Domänen, bei denen der Durchmesser 200 nm überschreitet, geringer als 30 % ist, wobei gleichzeitig der Volumenanteil an Polysiloxan-Domänen, bei denen der Durchmesser eine Länge von 500 nm überschreitet, geringer als 0,1 % ist, wobei die relative Lösungsviskosität von 1,24 bis 1,34, bevorzugt von 1,26 bis 1,33, besonders bevorzugt von 1,27 bis 1,32, beträgt;

15. Verwendung eines Polysiloxan-Polycarbonat-Blockcopolymers nach Anspruch 13 zur Herstellung von Formkörpern.
